# EUROPEAN PATENT APPLICATION

(11) **EP 4 053 389 A1**
(43) Date of publication of application: **07.09.2022**
(21) Application number: 22156071.7
(22) Date of filing: 10.02.2022
(51) Int. Cl.: F02C 7/052, B01D 45/04, B64D 33/02

(54) **EJECTOR DRIVEN SCAVENGE SYSTEM FOR PARTICLE SEPARATOR ASSOCIATED WITH GAS TURBINE ENGINE**

(30) Priority: 01.03.2021 US 202163154941 P; 21.01.2022 US 202217580909
(71) Applicant: Honeywell International Inc., Charlotte, NC 28202 (US)
(72) Inventor: HOLLINGSHEAD, Douglas, Charlotte, 28202 (US); GUYMON, Jeffrey, Charlotte, 28202 (US); PEARSON, John, Charlotte, 28202 (US); ANDERSON, Morris, Charlotte, 28202 (US)
(74) Representative: LKGlobal UK Ltd.

(57) **Abstract**

An ejector driven scavenge system for a particle separator having a scavenge branch associated with a gas turbine engine includes at least one anti-icing circuit to receive an anti-icing fluid. The at least one anti-icing circuit is to be coupled to the particle separator. The ejector driven scavenge system includes at least one flow ejector bank to be coupled to the scavenge branch and fluidly coupled to the anti-icing fluid to direct the anti-icing fluid through the scavenge branch to drive air with entrained particles and water droplets from the particle separator.

## Description

### CROSS-REFERENCE TO RELATED APPLICATION

This application claims the benefit of U.S. Provisional Application No. 63/154,941, filed on March 1, 2021. The disclosure of the above referenced application is incorporated herein by reference.

### TECHNICAL FIELD

The present disclosure generally relates to gas turbine engines, and more particularly relates to an ejector driven scavenge system for a particle separator associated with a gas turbine engine.

### BACKGROUND

Gas turbine engines may be employed to power various devices. For example, a gas turbine engine may be employed to power a mobile platform, such as an aircraft, rotorcraft, etc. In the example of the gas turbine engine powering a mobile platform, during the operation of the gas turbine engine, air from the atmosphere is pulled into the gas turbine engine and used to generate energy to propel the mobile platform. In desert operating environments, it may be desirable to employ a particle separator to remove sand and dust particles from an air stream that is drawn into the gas turbine engine. The particle separator may employ a blower to draw the sand and dust particles out of the air stream. A blower, however, is susceptible to erosion, icing, and requires additional mechanical or electrical components, which increase a weight associated with the gas turbine engine.

In addition, in certain operating environments, super cooled droplets may be drawn into the inlet, where they deposit on surfaces. The deposit of the super cooled droplets on surfaces associated with a particle separator may form ice. The formation of ice may impede the airflow drawn into the gas turbine engine. In addition, the ice may also become dislodged, which is undesirable for components of the gas turbine engine.

Accordingly, it is desirable to provide an ejector driven scavenge system for a particle separator associated with a gas turbine engine, which reduces an amount of sand, dust and water droplets drawn into the gas turbine engine without requiring a blower. In addition, it is desirable to provide an anti-icing system for the particle separator that reduces the buildup of ice that may reduce the airflow into the gas turbine engine or may dislodge and affect components associated with the gas turbine engine. Furthermore, other desirable features and characteristics of the present disclosure will become apparent from the subsequent detailed description and the appended claims, taken in conjunction with the accompanying drawings and the foregoing technical field and background.

### SUMMARY

According to various embodiments, provided is an ejector driven scavenge system for a particle separator having a scavenge branch associated with a gas turbine engine. The ejector driven scavenge system includes at least one anti-icing circuit configured to receive an anti-icing fluid. The at least one anti-icing circuit is configured to be coupled to the particle separator. The ejector driven scavenge system includes at least one flow ejector bank configured to be coupled to the scavenge branch and fluidly coupled to the anti-icing fluid to direct the anti-icing fluid through the scavenge branch to drive air with entrained particles and water droplets from the particle separator.

The at least one anti-icing circuit includes a first anti-icing circuit and a second anti-icing circuit, and the at least one flow ejector bank includes a first flow ejector nozzle bank and a second flow ejector nozzle bank, with the first flow ejector nozzle bank fluidly coupled to the first anti-icing circuit and the second flow ejector nozzle bank fluidly coupled to the second anti-icing circuit. The first flow ejector nozzle bank is opposite the second flow ejector nozzle bank in the scavenge branch. The first anti-icing circuit is configured to be coupled to an opposite side of the particle separator than the second anti-icing circuit. The first flow ejector nozzle bank includes a plurality of first flow ejector nozzles, the second flow ejector nozzle bank includes a plurality of second flow ejector nozzles, and each first flow ejector nozzle of the plurality of first flow ejector nozzles alternates with a respective one of the plurality of second flow ejector nozzles along an axis defined through the scavenge branch. The ejector driven scavenge system includes a first manifold fluidly coupled to the first anti-icing circuit and fluidly coupled to the first flow ejector nozzle bank, and a second manifold fluidly coupled to the second anti-icing circuit and fluidly coupled to the second flow ejector nozzle bank. The first manifold and the second manifold are configured to be disposed external to the scavenge branch. The ejector driven scavenge system includes a first manifold fluidly coupled to the anti-icing fluid and including a plurality of first holes configured to direct the anti-icing fluid through the scavenge branch, a second manifold fluidly coupled to the anti-icing fluid and including a plurality of second holes configured to direct the anti-icing fluid through the scavenge branch, and the plurality of first holes and the plurality of second holes form the at least one flow ejector bank. The first manifold and the second manifold are configured to be disposed at least partially within the scavenge branch. A first flow area defined by the plurality of first holes in the first manifold is different than a second flow area defined by the plurality of second holes defined in the second manifold. The gas turbine engine is associated with a vehicle, and the ejector driven scavenge system further comprises a source of the anti-icing fluid that is fluidly coupled to the at least one anti-icing circuit, and the source is the gas turbine engine.

Further provided is a gas turbine engine for a vehicle. The gas turbine engine includes a source of an anti-icing fluid, and a particle separator including an inlet and a scavenge branch. The inlet is configured to receive air and the particle separator is configured to separate entrained particles and water droplets from the air. The gas turbine engine includes a first anti-icing circuit fluidly coupled to the source of the anti-icing fluid. The first anti-icing circuit is coupled to the particle separator. The first anti-icing circuit includes a first manifold coupled to the scavenge branch and at least one flow ejector that is fluidly coupled to the first manifold and to the scavenge branch, and the at least one flow ejector is configured to receive the anti-icing fluid to drive the entrained particles and the water droplets from the particle separator.

The gas turbine engine includes a second anti-icing circuit coupled to the source of the anti-icing fluid, the second anti-icing circuit coupled along the particle separator opposite the first anti-icing circuit from proximate the inlet to the scavenge branch, the second anti-icing circuit includes a second manifold coupled to the scavenge branch and at least one second flow ejector that is fluidly coupled to the second manifold and to the scavenge branch, and the at least one second flow ejector is configured to receive the anti-icing fluid to drive the entrained particles and the water droplets from the particle separator. The at least one flow ejector comprises a plurality of first flow ejector nozzles, the at least one second flow ejector comprises a plurality of second flow ejector nozzles, and each first flow ejector nozzle of the plurality of first flow ejector nozzles alternates with a respective one of the plurality of second flow ejector nozzles along an axis defined through the scavenge branch. The gas turbine engine includes a second anti-icing circuit coupled to a second source of the anti-icing fluid, the second anti-icing circuit coupled along the particle separator opposite the first anti-icing circuit from proximate the inlet to the scavenge branch and the source of the anti-icing fluid is different than the second source of the anti-icing fluid. The source of the anti-icing fluid is the gas turbine engine and the second source of the anti-icing fluid is an auxiliary power unit associated with the vehicle. The first anti-icing circuit includes a plenum fluidly coupled to the source of the anti-icing fluid and fluidly coupled to the first manifold. The first anti-icing circuit is defined as a double wall along a surface of a wall of the particle separator. The first anti-icing circuit is defined as at least one conduit coupled to the particle separator.

Als provided is a gas turbine engine for a vehicle. The gas turbine engine includes a source of an anti-icing fluid and a particle separator including an inlet and a scavenge branch. The inlet is configured to receive air and the particle separator configured to separate entrained particles and water droplets from the air. The gas turbine engine includes a first anti-icing circuit fluidly coupled to the source of the anti-icing fluid, and the first anti-icing circuit is coupled to the particle separator. The gas turbine engine includes a first flow ejector manifold coupled to the scavenge branch so as to be partially received within the scavenge branch. The first flow ejector manifold defines at least one flow ejector that is fluidly coupled to the first flow ejector manifold and to the scavenge branch. The at least one flow ejector is configured to receive the anti-icing fluid to drive the entrained particles and the water droplets from the particle separator.

### DESCRIPTION OF THE DRAWINGS

The exemplary embodiments will hereinafter be described in conjunction with the following drawing figures, wherein like numerals denote like elements, and wherein:
FIG. 1 is a schematic illustration of a gas turbine engine, which includes an exemplary ejector driven scavenge system for a particle separator in accordance with the various teachings of the present disclosure;
FIG. 2 is a schematic cross-sectional illustration of the ejector driven scavenge system coupled to the particle separator associated with the gas turbine engine, taken from the perspective of line 2-2 of FIG. 1, which schematically illustrates a first anti-icing circuit and a second anti-icing circuit of the ejector driven scavenge system;
FIG. 3 is a schematic illustration of the gas turbine engine, which includes another exemplary ejector driven scavenge system for a particle separator in accordance with the various teachings of the present disclosure;
FIG. 3A is a cross-sectional view of the ejector driven scavenge system for the particle separator of FIG. 3, taken along line 3A-3A of FIG. 3;
FIG. 4 is a perspective view of the ejector driven scavenge system of FIG. 1 coupled to the particle separator;
FIG. 5 is a top view of the ejector driven scavenge system of FIG. 1 coupled to the particle separator;
FIG. 6 is a schematic illustration of a gas turbine engine, which includes another exemplary ejector driven scavenge system for a particle separator in accordance with the various teachings of the present disclosure;
FIG. 7 is a top view of the ejector driven scavenge system of FIG. 6 coupled to the particle separator;
FIG. 8 is a detail end view of a first ejector manifold and a second ejector manifold of the ejector driven scavenge system of FIG. 6;
FIG. 9 is a perspective view of the first ejector manifold; and
FIG. 10 is a detail view of the first ejector manifold and a second ejector manifold of the ejector driven scavenge system of FIG. 6.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description. In addition, those skilled in the art will appreciate that embodiments of the present disclosure may be practiced in conjunction with any type of engine that would benefit from an ejector driven scavenge system and the use of the ejector driven scavenge system with a particle separator for a gas turbine engine described herein is merely one exemplary embodiment according to the present disclosure. In addition, while the ejector driven scavenge system is described herein as being used with a gas turbine engine onboard a mobile platform, such as a bus, motorcycle, train, motor vehicle, marine vessel, aircraft, rotorcraft and the like, the various teachings of the present disclosure can be used with a gas turbine engine on a stationary platform. Further, it should be noted that many alternative or additional functional relationships or physical connections may be present in an embodiment of the present disclosure. In addition, while the figures shown herein depict an example with certain arrangements of elements, additional intervening elements, devices, features, or components may be present in an actual embodiment. It should also be understood that the drawings are merely illustrative and may not be drawn to scale.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction.

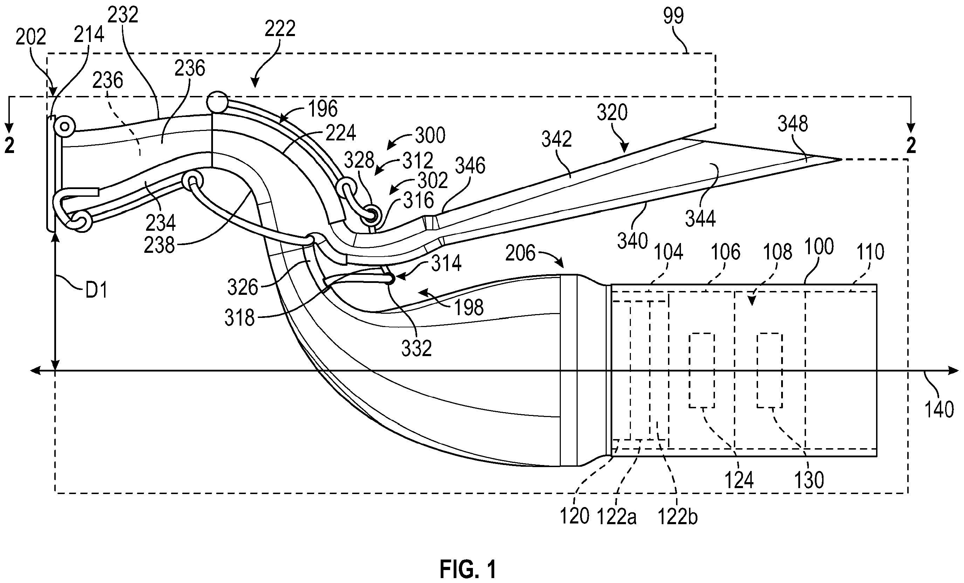

With reference to FIG. 1, a schematic view of an exemplary gas turbine engine 100 is shown, which includes an ejector driven scavenge system 300 and an inlet particle separator or particle separator 198. The gas turbine engine 100 is axisymmetric about a longitudinal axis or centerline 140, which also comprises an axis of rotation for the gas turbine engine 100. In the depicted embodiment, the gas turbine engine 100 is an annular turboshaft gas turbine engine within a vehicle, such as a rotorcraft 99, although other arrangements and uses may be provided. As will be discussed herein, the gas turbine engine 100 is coupled to the particle separator 198 for removing fine sand, dust particles and water droplets from atmospheric air drawn into the gas turbine engine 100 during operation. The ejector driven scavenge system 300 is coupled to the particle separator 198, and draws the sand, dust particles and water droplets that enter into the particle separator 198 out of an airflow stream that flows to the gas turbine engine 100. In addition, as will be discussed, the ejector driven scavenge system 300 also provides anti-icing for at least a portion of the particle separator 198, which reduces the amount of ice that may form on the surface of the inlet 202 associated with the particle separator 198. Without this protection, ice may form and reduce performance of the gas turbine engine 100 by increasing blockage of the airflow through the particle separator 198. The formation of ice may also affect the components of the gas turbine engine 100 if the ice sheds and is ingested by the gas turbine engine 100.

In this example, the gas turbine engine 100 also includes a compressor section 104, a combustor section 106, the turbine section 108, and an exhaust section 110. The compressor section 104 is coupled to and in fluid communication with the particle separator 198. The compressor section 104 may include an inlet guide vane 120 and one or more axial or radial compressors 122a, 122b. In other embodiments, the number of compressors in the compressor section 104 may vary. In the depicted embodiment, the inlet guide vane 120 directs the air received from the particle separator 198 to the compressors 122a, 122b, which sequentially raise the pressure of the air and direct a majority of the high pressure air into the combustor section 106. A fraction of the compressed air downstream from the compressor 122b bypasses the combustor section 106 and is used by the ejector driven scavenge system 300. In addition, in certain embodiments, a fraction of the compressed air downstream from the compressor 122a and upstream from the compressor 122b bypasses the combustor section 106 and is used by the ejector driven scavenge system 300.

In the embodiment of FIG. 1, in the combustor section 106, which includes a combustion chamber 124, the high pressure air is mixed with fuel, which is combusted. The high-temperature combustion air is directed into the turbine section 108. In this example, the turbine section 108 includes at least one turbine 130. However, it will be appreciated that the number of turbines, and/or the configurations thereof, may vary. In this embodiment, the high-temperature air from the combustor section 106 expands through and rotates the turbine 130. As the turbine 130 rotates, the turbine 130 drives equipment in the gas turbine engine 100 via concentrically disposed shafts or spools. In one example, the turbine 130 drives the compressors 122a, 122b via a powershaft and further drives other components associated with the rotorcraft 99 such as a rotor, etc. The combustive gases are exhausted via the exhaust section 110.

In one example, the particle separator 198 is coupled to the gas turbine engine 100 so as to be upstream from the compressor inlet or the inlet guide vane 120. As the particle separator 198 is substantially similar to the inlet particle separator 200 of commonly assigned U.S. Application No. 16/952,921 filed on November 19, 2020 titled "Asymmetric Inlet Particle Separator for Gas Turbine Engine" to Judd et al., the relevant portion of which is incorporated by reference herein, the particle separator 198 will not be discussed in detail herein and the same reference numerals associated with the inlet particle separator 200 in U.S. Application No. 16/952,921 will be used herein to identify similar or substantially the same features of the particle separator 198. Briefly, the particle separator 198 includes the inlet 202, a duct 196 and the annulus 206. The particle separator 198 may be composed of composites, metal, or metal alloy, and may be formed via casting, additive manufacturing, such as direct metal laser sintering (DMLS), etc. As shown in FIG. 1, the inlet 202 and the duct 196 are offset or spaced apart from the longitudinal axis or centerline 140 of the gas turbine engine 100. The inlet 202 and the duct 196 are asymmetrical with regard to the longitudinal axis or centerline 140 of the gas turbine engine 100. The annulus 206 is positioned about the centerline 140 of the gas turbine engine 100, but is also asymmetrical with regard to the longitudinal axis or centerline 140. Thus, in this example, the particle separator 198 is asymmetrical relative to the longitudinal axis or centerline 140 of the gas turbine engine 100.

In one example, the inlet 202 is spaced the distance D1 from the longitudinal axis or centerline 140. The distance D1 is predetermined to enable the airflow to pass through the particle separator 198 and turn into the gas turbine engine 100, which is nested within the rotorcraft 99. The particle separator 198 utilizes the flow path turn to supply the airflow to the nested gas turbine engine 100, and the flow path turn defined by the particle separator 198 utilizes particle inertia to separate particles prior to the airflow reaching the gas turbine engine 100. The inlet 202 is positioned so as to be disposed on one side of the gas turbine engine 100 and is offset from the centerline 140 of the gas turbine engine 100. In this example, the inlet 202 is substantially elliptical in shape. Generally, the geometry of the inlet 202 may be angled or otherwise positioned as needed to properly interface with an airframe or external assembly associated with the rotorcraft 99. The inlet 202 may include the bellmouth 214 defined about the perimeter of the inlet 202 to guide air into the particle separator 198.

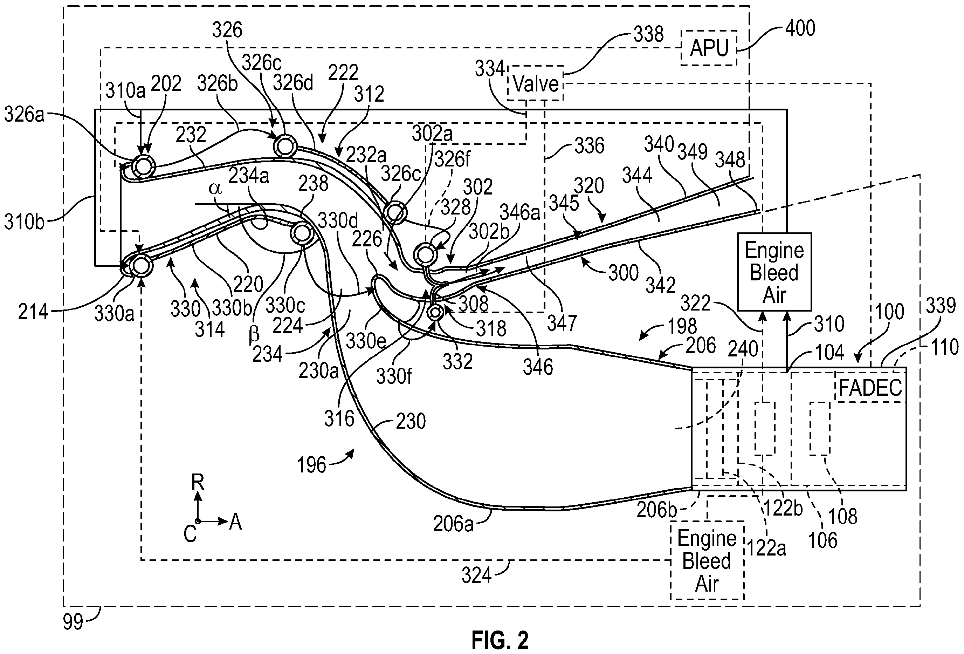

The duct 196 is integrally formed with and in fluid communication with the inlet 202. With reference to FIG. 2, the duct 196 couples or interconnects the inlet 202 with the annulus 206. The duct 196 includes the ramp surface 220, the throat 222, the transition section 224, the splitter 226, a scavenge branch 302 and the engine airflow branch 230. The duct 196 is bounded by the outer wall 232, the inner wall 234 opposite the outer wall 232 and opposing sidewalls 236 (FIG. 1). The ramp surface 220 is fluidly coupled to the inlet 202 and is downstream of the inlet 202. The ramp surface 220 extends at the angle α of about 10 to about 40 degrees. The angle α is defined between the ramp surface 220 and the line extending along the center of the inlet 202. The ramp surface 220 accelerates the particles entrained in the air that is drawn in through the inlet 202.

The throat 222 is downstream of the ramp surface 220. The throat 222 defines a bend 238 in the duct 196. Generally, the duct 196 narrows from the ramp surface 220 to the throat 222, and turns at the bend 238 at the throat 222 and flows to the transition section 224. In one example, the bend 238 is defined at the angle β of about 70 degrees to about 110 degrees. The angle β is defined between the ramp surface 220 and the engine airflow branch 230 along the inner wall surface 234a of the inner wall 234. The narrowing of the duct 196 at the throat 222 causes the particles accelerated by the ramp surface 220 to follow along the outer wall 232 of the duct 196. Generally, the bend 238 at the throat 222 causes air with entrained particles of all sizes (coarse particles greater than 100 micrometers (µm), mid-range particles 20-100 µm, and fine particles less than 20 µm) to gather near and along the outer wall 232, and flow into the downstream scavenge branch 302. Air devoid of particles tends to follow the bend 238 at the throat 222 and flow along the inner wall 234 of the duct 196 to the downstream engine airflow branch 230.

The transition section 224 interconnects the throat 222, the scavenge branch 302 and the engine airflow branch 230. The duct 196 widens at the transition section 224 so that the curved shape of the outer wall 232 can provide favorable rebound angles to assist in directing larger particles (particles greater than 100 µm) into the scavenge branch 302. In this regard, the transition section 224 widens toward the scavenge branch 302 so that larger particles that contact the inner wall 234 downstream of the bend 238 will rebound toward the outer wall 232 prior to reaching the splitter 226. In addition, the transition section 224 provides finer particles (less than 20 µm) more time to reach the outer wall 232 prior to reaching the splitter 226.

The splitter 226 is downstream from the transition section 224. The bend 238 at the throat 222 defines a tortuous path to the splitter 226, which directs the particles entrained in the air into the scavenge branch 302. By placing the splitter 226 hidden or outside of the line of sight of the inlet 202, finer particles (less than 20 µm) have more time to reach the outer wall 232 prior to reaching the splitter 226, and particles larger than 20 µm are inhibited from initially striking on a side of the splitter 226 facing the engine airflow branch 230 after entering the inlet 202. In this example, the splitter 226 is defined as a sharp bend or knee in the duct 196 downstream of the transition section 224, which serves to separate the scavenge branch 302 from the engine airflow branch 230. Generally, the splitter 226 extends between the scavenge branch 302 and the engine airflow branch 230 and cooperates with the outer wall 232 to define an inlet 302a to the scavenge branch 302. The splitter 226 cooperates with the inner wall 234 to define the inlet 230a for the engine airflow branch 230.

The scavenge branch 302 is defined between the splitter 226 and the outer wall 232 downstream from the transition section 224. The scavenge branch 302 also includes a scavenge outlet 302b in fluid communication with the ejector driven scavenge system 300, as will be discussed. The scavenge branch 302 is fluidly isolated from the annulus 206 or is not in fluid communication with the annulus 206. The scavenge branch 302 is generally rectangular in cross-section just downstream of splitter 226, however, the scavenge branch 302 may have any desired shape. The scavenge branch 302 is spaced apart from and fluidly isolated from the engine airflow branch 230. Generally, the scavenge branch 302 receives the particles as the particles follow along the outer wall 232 and separates the particles from the airflow entering the gas turbine engine 100. The separated particles may be exhausted by the ejector driven scavenge system 300 out of the rotorcraft 99 (FIG. 1).

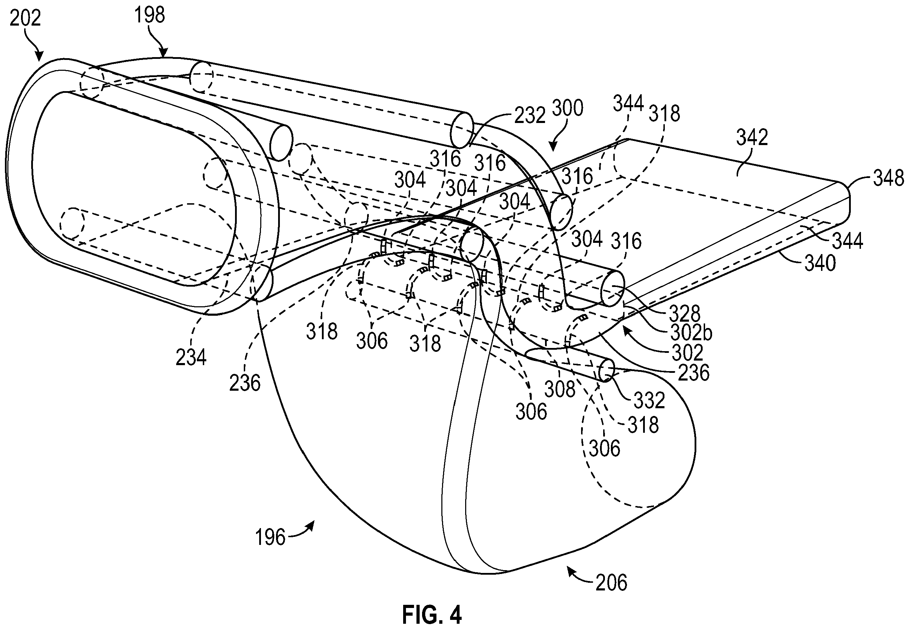

In one example, with reference to FIG. 4, the scavenge branch 302 includes at least one or a plurality of first ejector openings 304 defined through the outer wall 232. Generally, the first ejector openings 304 are defined through the outer wall 232 so as to be spaced apart between the sidewalls 236 associated with the scavenge branch 302. The scavenge branch 302 also includes at least one or a plurality of second ejector openings 306 defined through a scavenge branch inner wall 308. The scavenge branch inner wall 308 is opposite the outer wall 232 associated with the scavenge branch 302. Generally, the second ejector openings 306 are defined through the scavenge branch inner wall 308 so as to be spaced apart between the sidewalls 236 associated with the scavenge branch 302. As will be discussed, the first ejector openings 304 and the second ejector openings 306 are each in communication with the ejector driven scavenge system 300.

With reference back to FIG. 2, the engine airflow branch 230 is defined between the splitter 226 and the inner wall 234 downstream of the transition section 224. The engine airflow branch 230 is fluidly coupled to the annulus 206. The engine airflow branch 230 directs the airflow, which is substantially devoid of particles, to the annulus 206. The annulus 206 is downstream of the engine airflow branch 230, and is fluidly coupled to the compressor section 104 of the gas turbine engine 100 (FIG. 1). The annulus 206 is annular in cross-section, and includes an annulus inlet 206a fluidly coupled to the engine airflow branch 230 and an annulus outlet 206b fluidly coupled to the inlet guide vane 120 (FIG. 1) of the gas turbine engine 100 (FIG. 1). It should be noted that the annulus 206 may not be axisymmetric, but rather, may also be a super-ellipse in cross-section. The annulus 206 defines the opening 240, which is sized to enable the annulus 206 to be positioned about the powershaft and to be fluidly coupled to the inlet guide vane 120 (FIG. 1).

With reference to FIG. 2, the ejector driven scavenge system 300 removes the entrained sand, dust particles and water droplets from the scavenge branch 302 and exhausts the sand, dust particles and water droplets from the rotorcraft 99 (FIG. 1), while also providing anti-icing to the particle separator 198. In one example, the ejector driven scavenge system 300 includes at least one supply conduit 310, a first anti-icing circuit 312, a second anti-icing circuit 314, at least one or a plurality of first flow ejector nozzles 316, at least one or a plurality of second flow ejector nozzles 318 and an ejector duct 320. The first flow ejector nozzles 316 are arranged in a first flow ejector nozzle bank, and the second flow ejector nozzles 318 are arranged in a second flow ejector nozzle bank. Generally, the first anti-icing circuit 312 and the second anti-icing circuit 314 cooperate to heat the particle separator 198 along the bellmouth 214 of the inlet 202, along the ramp surface 220, along the throat 222, the outer wall 232 of the transition section 224 and along the splitter 226 to inhibit detrimental ice buildup. Generally, detrimental ice buildup is ice that may cause blockage of the airflow through the particle separator 198, which reduces performance of the gas turbine engine 100, or ice that may shed and affect the components associated with the gas turbine engine 100 and/or the ejector driven scavenge system 300. It should be noted that the surfaces heated by the first anti-icing circuit 312 and the second anti-icing circuit 314 are merely an example, as the first anti-icing circuit 312 and the second anti-icing circuit 314 may be coupled to additional portions of the particle separator 198 for heating. In FIG. 2, an axial direction A is a direction substantially parallel to the centerline 140 of the gas turbine engine 100, a radial direction R is a direction substantially perpendicular to the centerline 140 of the gas turbine engine 100, and a circumferential direction C is a direction tangential to the centerline 140 of the gas turbine engine 100.

In one example, the ejector driven scavenge system 300 includes a single supply conduit 310, which is fluidly coupled to the compressor section 104 of the gas turbine engine 100 and fluidly coupled to both of the first anti-icing circuit 312 and the second anti-icing circuit 314. In this example, the supply conduit 310 supplies bleed air from the compressor section 104, such as bleed air from the compressor 122b to each of the first anti-icing circuit 312 and the second anti-icing circuit 314. The bleed air from the compressor section 104 is an anti-icing fluid. The supply conduit 310 may include tubing, ducting, pneumatic couplings, and the like to fluidly couple the compressor section 104 to each of the first anti-icing circuit 312 and the second anti-icing circuit 314. One or more valves may also be coupled to the supply conduit 310, if desired, to control an amount of fluid flow through the supply conduit 310, and an amount of anti-icing fluid supplied to the first anti-icing circuit 312 and the second anti-icing circuit 314. In this example, the supply conduit 310 may include a branched outlet end such that the supply conduit 310 is fluidly coupled to the first anti-icing circuit 312 via a first branch 310a and is fluidly coupled to the second anti-icing circuit 314 via a second branch 310b.

In other examples, the ejector driven scavenge system 300 includes two supply conduits 322, 324. In this example, the supply conduit 322 directs the bleed air from the compressor section 104 as the anti-icing fluid to the first anti-icing circuit 312 and the supply conduit 324 directs the bleed air from the compressor section 104 as the anti-icing fluid to the second anti-icing circuit 314. By providing the supply conduits 322, 324, two different sources of bleed air may be used by the first anti-icing circuit 312 and the second anti-icing circuit 314 to anti-ice the particle separator 198 and to remove the entrained sand, dust particles and water droplets from the scavenge branch 302. In one example, the supply conduit 322 is fluidly coupled to the compressor section 104 to receive bleed air from a downstream compressor as the anti-icing fluid, such as the compressor 122b, and is fluidly coupled to the first anti-icing circuit 312 to deliver the bleed air from the compressor section 104 to the first anti-icing circuit 312. The supply conduit 324 is fluidly coupled to the compressor section 104 to receive bleed air from an upstream compressor as the anti-icing fluid, such as the compressor 122a and is fluidly coupled to the second anti-icing circuit 314 to deliver the bleed air from the compressor section 104 to the second anti-icing circuit 314. The supply conduits 322, 324 may include tubing, ducting, pneumatic couplings, and the like to fluidly couple the compressor section 104 to the respective one of the first anti-icing circuit 312 and the second anti-icing circuit 314. One or more valves may also be coupled to the supply conduits 322, 324, if desired, to control an amount of anti-icing fluid flow through the supply conduits 322, 324, and an amount of anti-icing fluid supplied to the first anti-icing circuit 312 and the second anti-icing circuit 314.

It should be noted that while the compressor section 104 is described and illustrated herein as comprising the source of bleed air or the source of anti-icing fluid for the anti-icing circuit 312, 314 and the flow ejector nozzles 316, 318, other sources of anti-icing fluid may be employed to supply the anti-icing circuit 312, 314 and the flow ejector nozzles 316, 318 with anti-icing fluid. For example, with reference to FIG. 2, the anti-icing circuit 312, 314 and the flow ejector nozzles 316, 318 may be fluidly coupled to an auxiliary power unit (APU) 400 associated with the rotorcraft 99 (FIG. 1) to receive bleed air or other fluid from the APU 400 as the anti-icing fluid. In this example, tubing, ducting, pneumatic couplings, and the like may be used to fluidly couple the APU 400 to the anti-icing circuit 312, 314 and the flow ejector nozzles 316, 318. In other examples, an external source of anti-icing fluid, such as an electrically driven stand-alone compressor may be employed to provide anti-icing fluid to the anti-icing circuit 312, 314 and the flow ejector nozzles 316, 318. Thus, the gas turbine engine 100 need not be the source of bleed air for the ejector driven scavenge system 300, but rather other sources may be employed, such as the APU 400 or an external source, to supply the anti-icing fluid to the particle separator 198. This may be desirable to optimize an efficiency of the gas turbine engine 100.

The first anti-icing circuit 312 is coupled to the outer wall 232 of the duct 196. In one example, the first anti-icing circuit 312 extends from the inlet 202 to the scavenge branch 302 along the outer wall 232 of the particle separator 198. The first anti-icing circuit 312 includes a first anti-icing conduit 326 that terminates in a first manifold 328. The first anti-icing conduit 326 is fluidly coupled to the supply conduit 310, 322 and receives the bleed air or anti-icing fluid from the compressor section 104. As the bleed air from the compressor section 104 is warmer than the ambient air surrounding the particle separator 198, the bleed air or anti-icing fluid warms the outer wall surface 232a as the bleed air flows through the first anti-icing conduit 326. By warming the outer wall surface 232a, the first anti-icing conduit 326 substantially reduces or eliminates ice buildup that may reduce the airflow through the particle separator 198, which reduces performance of the gas turbine engine 100, or ice that may shed and affect the components associated with the gas turbine engine 100 and/or the ejector driven scavenge system 300.

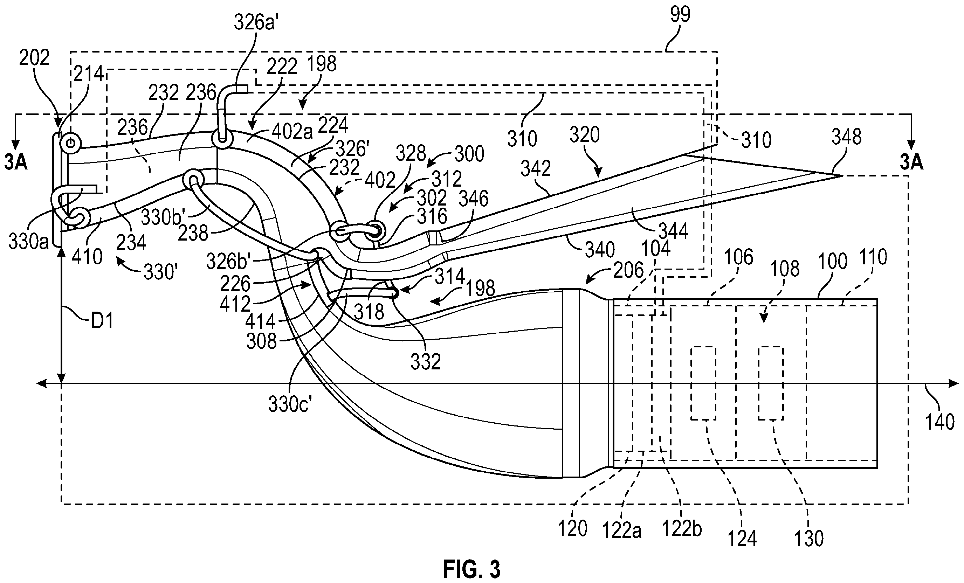

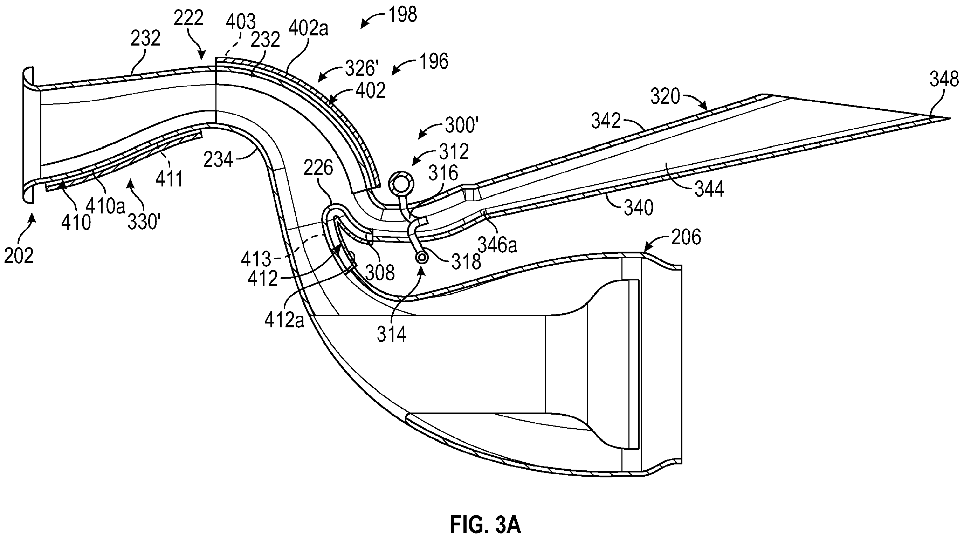

In one example, the first anti-icing conduit 326 is composed of a cylindrical flexible tubing, which is fluidly coupled to the supply conduit 310, 322 and to the first manifold 328. It should be noted that the first anti-icing conduit 326 need not be cylindrical, but may have any suitable polygonal cross-sectional shape, such as rectangular, square, oval, etc. In addition, it should be noted that the shape and size of the first anti-icing conduit 326 shown in the figures is merely an example. The first anti-icing conduit 326 is also coupled to the outer wall 232 so as to extend between the inlet 202 and the scavenge branch 302. In one example, the first anti-icing conduit 326 is coupled to the outer wall 232 so as to form a pattern, in which a first portion 326a of the first anti-icing conduit 326 extends in the circumferential direction C along the inlet 202 at the bellmouth 214 before turning, arching, or bending to define a second portion 326b that extends in substantially axially or in the axial direction A along the outer wall 232. The second portion 326b turns, arches, or bends to define a third portion 326c that extends in the circumferential direction C along the outer wall 232. The third portion 326c turns, arches, or bends to define a fourth portion 326d that extends substantially axially or in the axial direction A along the outer wall 232. The fourth portion 326d turns, arches, or bends to define a fifth portion 326e that extends circumferentially or in the circumferential direction C along the outer wall 232 along the transition section 224. The fifth portion 326e turns, arches, or bends to define a sixth portion 326f that extends substantially axially or in the axial direction A along the outer wall 232 to the scavenge branch 302. The sixth portion 326f is fluidly coupled to the first manifold 328, which extends substantially circumferentially or in the circumferential direction C along the scavenge branch 302 (FIG. 3).

It should be noted that this configuration or arrangement of the first anti-icing conduit 326 is merely exemplary, as the first anti-icing conduit 326 may be arranged in any desired pattern along the outer wall 232 to provide anti-icing for the particle separator 198 between the inlet 202 and the scavenge branch 302. For example, the first anti-icing conduit 326 may be orientated positive or negative 90 degrees relative to the foregoing description. Alternatively, the first anti-icing conduit 326 may be arranged in a plurality of vertical columns or horizontal rows along the outer wall 232. In other examples, the first anti-icing conduit 326 may comprise a first plenum upstream from a second plenum, and may include a double wall that extends between the first plenum and the second plenum to direct the bleed air or anti-icing fluid from the first plenum through the double wall to the second plenum to heat the outer wall surface 232a of the outer wall 232. In this example, the first plenum may be coupled to the inlet 202 at the bellmouth 214, and the second plenum may be coupled to the scavenge branch 302, with the double wall extending along the outer wall 232 and fluidly interconnecting the first plenum and the second plenum. The second plenum, in this example, may comprise the first manifold 328 or may be fluidly coupled to the first manifold 328.

It should be noted that this configuration or arrangement of the first anti-icing conduit 326 is merely exemplary, and with reference to FIG. 3, another exemplary anti-icing conduit 326' is shown. In this example, the first anti-icing conduit 326' includes a plenum 402 that is integrally formed with the particle separator 198 as a double wall, which may be defined to extend from proximate the bend 238 to the transition section 224 along the outer wall 232 as shown in FIG. 3. It should also be noted that while the first anti-icing conduit 326 is illustrated and described herein as heating the inlet 202, the first anti-icing conduit 326 need not heat the inlet 202, and rather, may heat the outer wall 232 from proximate the bend 238 and along the transition section 224 to the first manifold 328. In the example of FIG. 3, the anti-icing conduit 326' is fluidly coupled to a supply, such as the supply conduit 310, 322 at a first portion 326a' proximate the bend 238. The first portion 326a' is fluidly coupled to the plenum 402 and the supply, and provides the fluid from the supply to the plenum 402. The plenum 402 is integrally formed with the outer wall 232, via additive manufacturing, for example, to define a chamber that receives the fluid from the supply conduit 310, 322 and defines a flow path along the outer wall 232 (FIG. 3A). The plenum 402 may include vanes, fins or other flow guiding structures 403 (FIG. 3A) between an outer plenum wall 402a of the plenum 402 and the outer wall 232 to direct the flow from proximate the bend 238 to the transition section 224. A second portion 326b' of the anti-icing conduit 326' fluidly couples the plenum 402 to the first manifold 328.

The first manifold 328 is fluidly coupled to the first anti-icing conduit 326, 326' to receive the bleed air or anti-icing fluid from the supply conduit 310, 322, and is fluidly coupled to the first flow ejector nozzles 316 to supply the first flow ejector nozzles 316 with the anti-icing fluid. With reference to FIG. 4, the first manifold 328 extends between the opposed sidewalls 236 of the particle separator 198. The first manifold 328 is substantially cylindrical, however, the first manifold 328 may have any predetermined cross-sectional shape. The first manifold 328 defines a plenum that supplies the first flow ejector nozzles 316 with the bleed air or anti-icing fluid from the supply conduit 310, 322. In one example, the first flow ejector nozzles 316 are coupled to the first manifold 328 and extend from the first manifold 328 into the scavenge branch 302 via a respective one of the first ejector openings 304. Thus, the first flow ejector nozzles 316 are fluidly coupled to the first manifold 328 and to the scavenge branch 302, and use the anti-icing fluid from the supply conduit 310, 322 to direct the sand, dust particles and water droplets through the scavenge branch 302, the ejector duct 320 and into the atmosphere surrounding the rotorcraft 99 (FIG. 1). In this example, the first manifold 328 is shown with four first flow ejector nozzles 316, however, the first manifold 328 may include any number of first flow ejector nozzles 316. With reference back to FIG. 2, generally, the first manifold 328 is coupled to the outer wall 232 along the scavenge branch 302 so as to be downstream of the splitter 226 and the inlet 302a of the scavenge branch 302. In one example, the first manifold 328 is coupled to the scavenge branch 302 such that the first flow ejector nozzles 316 are upstream from the second flow ejector nozzles 318 in a direction of flow through the scavenge branch 302.

With reference to FIG. 2, the second anti-icing circuit 314 is coupled to the inner wall 234 of the duct 196. In one example, the second anti-icing circuit 314 extends from the inlet 202 to the scavenge branch 302 along the inner wall 234 of the particle separator 198. The second anti-icing circuit 314 includes a second anti-icing conduit 330 that terminates in a second manifold 332. The second anti-icing conduit 330 is fluidly coupled to the supply conduit 310, 324 and receives the bleed air from the compressor section 104 as the anti-icing fluid. As the bleed air from the compressor section 104 is warmer than the ambient air surrounding the particle separator 198, the bleed air warms the inner wall surface 234a as the bleed air flows through the second anti-icing conduit 330. By warming the inner wall surface 234a, the second anti-icing conduit 330 also substantially reduces or eliminates ice forming downstream of the inlet 202 and affecting the gas turbine engine 100.

In one example, the second anti-icing conduit 330 is composed of a cylindrical flexible tubing, which is fluidly coupled to the supply conduit 310, 324 and to the second manifold 332. It should be noted that the second anti-icing conduit 330 need not be cylindrical, but may have any suitable polygonal cross-sectional shape, such as rectangular, square, oval, etc. In addition, it should be noted that the shape and size of the second anti-icing conduit 330 shown in the figures is merely an example. The second anti-icing conduit 330 is also coupled to the inner wall 234 so as to extend between the inlet 202 and the scavenge branch 302. In one example, the second anti-icing conduit 330 is coupled to the inner wall 234 so as to form a pattern along the inner wall 234, in which a first portion 330a of the second anti-icing conduit 330 extends in the circumferential direction C along the inlet 202 at the bellmouth 214 before turning, arching, or bending to define a second portion 330b that extends in substantially axially or in the axial direction A along the inner wall 234. The second portion 330b turns, arches, or bends to define a third portion 330c that extends in the circumferential direction C along the inner wall 234. The third portion 330c turns, arches, or bends to define a fourth portion 330d that extends substantially axially or in the axial direction A along the inner wall 234. The fourth portion 330d turns, arches, or bends to define a fifth portion 330e that extends circumferentially or in the circumferential direction C along the scavenge branch inner wall 308 downstream of the splitter 226. The fifth portion 330e turns, arches, or bends to define a sixth portion 330f that extends substantially axially or in the axial direction A along the scavenge branch inner wall 308 to the second manifold 332. The sixth portion 330f is fluidly coupled to the second manifold 332, which extends substantially circumferentially or in the circumferential direction C along the scavenge branch 302 (FIG. 3).

It should be noted that this configuration or arrangement of the second anti-icing conduit 330 is merely exemplary, as the second anti-icing conduit 330 may be arranged in any desired pattern along the inner wall 234 and the scavenge branch inner wall 308 to provide anti-icing for the particle separator 198 between the inlet 202 and the scavenge branch 302. For example, the second anti-icing conduit 330 may be orientated positive or negative 90 degrees relative to the foregoing description. Alternatively, the second anti-icing conduit 330 may be arranged in a plurality of vertical columns or horizontal rows along the inner wall 234. In other examples, the second anti-icing conduit 330 may comprise a first plenum upstream from a second plenum, and may include a double wall that extends between the first plenum and the second plenum to direct the bleed air or anti-icing fluid from the first plenum through the double wall to the second plenum to heat the inner wall surface 234a of the inner wall 234. In this example, the first plenum may be coupled to the inlet 202 at the bellmouth 214, and the second plenum may be coupled to the throat 222 of the duct 196, with the double wall extending along the inner wall 234 and fluidly interconnecting the first plenum and the second plenum. The second plenum, in this example, is fluidly coupled to a third plenum disposed downstream of the splitter 226 along the scavenge branch inner wall 308, which is fluidly coupled to the second manifold 332.

For example, with reference to FIG. 3, an exemplary second anti-icing conduit 330' is shown. In this example, the second anti-icing conduit 330' includes a first plenum 410 and a second plenum 412 that are each integrally formed with the particle separator 198 as a double wall. The first plenum 410 may be defined to extend from proximate the inlet 202 to the throat 222 along the inner wall 234 as shown in FIG. 3. It should also be noted that while the second anti-icing conduit 330' is illustrated and described herein as heating the inlet 202, the second anti-icing conduit 330' need not heat the inlet 202, and rather, may heat the inner wall 234 proximate the splitter 226. In the example of FIG. 3, the second anti-icing conduit 330' is fluidly coupled to a supply, such as the supply conduit 310, 322 at a first portion 330a' proximate the inlet 202. The first portion 330a' is fluidly coupled to the first plenum 410 and the supply, and provides the fluid from the supply to the first plenum 410. The first plenum 410 is integrally formed with the inner wall 234, via additive manufacturing, for example, and defines a flow path along the inner wall 234. The first plenum 410 may include vanes, fins or other flow guiding structures 411 (FIG. 3A) between an outer plenum wall 410a of the first plenum 410 and the inner wall 234 (FIG. 3A) to direct the flow from inlet 202 to the throat 222. A second portion 330b' of the second anti-icing conduit 330' fluidly couples the first plenum 410 to the second plenum 412. The second portion 330b' provides the fluid from the first plenum 410 to the second plenum 412. In one example, the second plenum 412 is defined along the splitter 226 so as to extend along the scavenge branch inner wall 308 opposite the outer wall 232 and so as to extend along a wall 414 opposite the inner wall 234 proximate the splitter 226. Stated another way, the second plenum 412 is defined along the exterior surfaces of the particle separator 198 proximate and at the splitter 226. The second plenum 412 is integrally formed with the particle separator 198 proximate and at the splitter 226, via additive manufacturing, for example, and defines a flow path along the particle separator 198 proximate and at the splitter 226. The second plenum 412 may include vanes, fins or other flow guiding structures 413 (FIG. 3A) between an outer plenum wall 412a (FIG. 3A) of the second plenum 412 and the inner wall 234 to direct the flow along the splitter 226. A third portion 330c' of the second anti-icing conduit 330' fluidly couples the second plenum 412 to the second manifold 332.

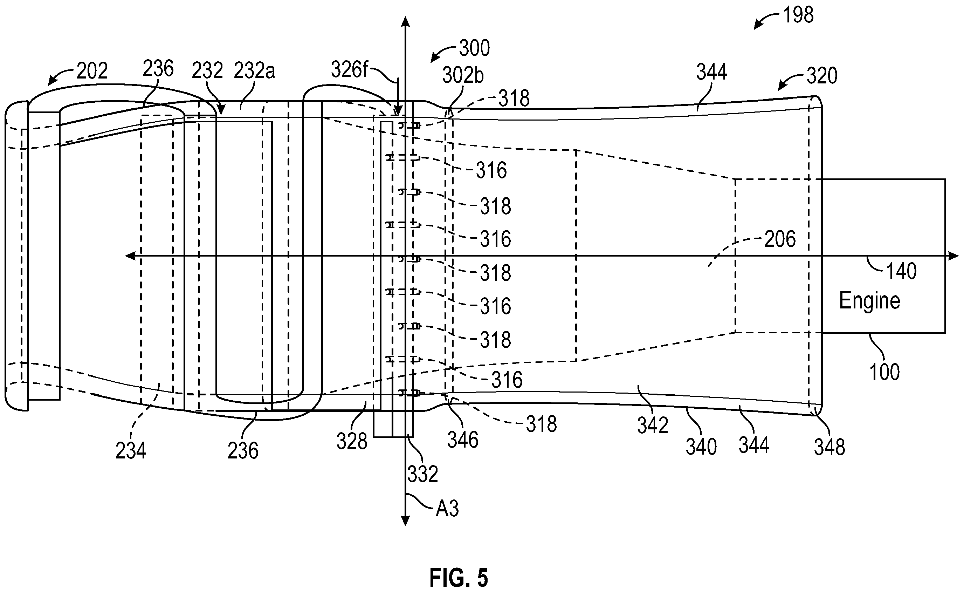

The second manifold 332 is fluidly coupled to the second anti-icing conduit 330, 330' to receive the bleed air or anti-icing fluid from the supply conduit 310, 324, and is fluidly coupled to the second flow ejector nozzles 318 to supply the second flow ejector nozzles 318 with the anti-icing fluid. Each of the first manifold 328 and the second manifold 332 are composed of a metal or metal alloy, and may be formed via casting, additive manufacturing, such as direct metal laser sintering (DMLS), etc. The first manifold 328 and the second manifold 332 may be formed separately or discrete from the particle separator 198 and coupled to the particle separator 198 via welding, etc. or may be integrally formed with the particle separator 198. With reference to FIG. 5, the second manifold 332 extends between the opposed sidewalls 236 of the particle separator 198. The second manifold 332 is substantially cylindrical, however, the second manifold 332 may have any predetermined cross-sectional shape. The second manifold 332 defines a plenum that supplies the second flow ejector nozzles 318 with the anti-icing fluid from the supply conduit 310, 324. In one example, the second flow ejector nozzles 318 are coupled to the second manifold 332 and extend from the second manifold 332 into the scavenge branch 302 via a respective one of the second ejector openings 306. Thus, the second flow ejector nozzles 318 are fluidly coupled to the second manifold 332 and to the scavenge branch 302, and use the anti-icing fluid from the supply conduit 310, 324 to direct the sand, dust particles and water droplets through the scavenge branch 302, the ejector duct 320 and into the atmosphere surrounding the rotorcraft 99 (FIG. 1). In this example, the second manifold 332 is shown with five second flow ejector nozzles 318, however, the second manifold 332 may include any number of second flow ejector nozzles 318.

Generally, the second flow ejector nozzles 318 are spaced apart along the second manifold 332 such that the second flow ejector nozzles 318 alternate with a respective one of the first flow ejector nozzles 316 along an axis A3 defined between the opposed sidewalls 236 of the particle separator 198. The axis A3 is substantially perpendicular to the centerline 140 of the gas turbine engine 100. With reference back to FIG. 2, generally, the second manifold 332 is coupled to the scavenge branch inner wall 308 along the scavenge branch 302 so as to be downstream of the splitter 226 and the inlet 302a of the scavenge branch 302, and so as to be upstream from the scavenge outlet 302b of the scavenge branch 302. In one example, the second manifold 332 is coupled to the scavenge branch 302 such that the second flow ejector nozzles 318 are downstream from the first flow ejector nozzles 316 in a direction of flow through the scavenge branch 302 and are upstream from a contraction 346a defined in the ejector duct 320. It should be noted, however, that the flow ejector nozzles 316, 318 may be positioned at any desired location within the scavenge branch 302 and the ejector duct 320, and computational fluid dynamics analysis may be employed to determine the position for the flow ejector nozzles 316, 318 within the scavenge branch 302 and/or ejector duct 320 based on the fluid dynamics associated with the particle separator 198 and the gas turbine engine 100.

In one example, each of the flow ejector nozzles 316, 318 comprise pipes, which are bent about 90 degrees to direct the high pressure bleed air or anti-icing fluid into the scavenge branch 302. Generally, each of the flow ejector nozzles 316, 318 have a contraction at the terminal or nozzle outlet end such that the outlet of each of the flow ejector nozzles 316, 318 is smaller than the inlet of each of the flow ejector nozzles 316, 318. The terminal or nozzle outlet end may have any predetermined shape, including, but not limited to, oval, circular, elliptical, etc. In this example, the flow ejector nozzles 316, 318 are spaced substantially evenly in the alternating pattern along the axis A3 to provide for uniform flow through the ejector duct 320, however, if the particle separator 198 receives twisting or turbulent flow through the inlet 202, the flow ejector nozzles 316, 318 may be non-uniformly spaced to accommodate the twisting flow through the inlet 202.

The ejector duct 320 is coupled to the scavenge outlet 302b of the scavenge branch 302. In one example, the ejector duct 320 is formed of a metal or metal alloy, via casting, additive manufacturing (direct metal laser sintering, etc.), and is coupled to the scavenge outlet 302b via welding. It should be noted that in other examples, the ejector duct 320 may be integrally formed or one-piece with the particle separator 198. In this example, the ejector duct 320 includes a top duct surface 340, a bottom duct surface 342 opposite the top duct surface 340 and opposed sidewalls 344, which cooperate to define a flow passage 345 that interconnects a duct inlet 346 with a duct outlet 348. The duct inlet 346 defines the contraction 346a downstream of the flow ejector nozzles 316, 318. The flow passage 345 includes a mixing section 347 and a diffuser section 349. The mixing section 347 extends from proximate the duct inlet 346 to the diffuser section 349. The mixing section 347 enables the air from the flow ejector nozzles 316, 318 to mix with the air with the entrained particles prior to flowing to the diffuser section 349. The diffuser section 349 is downstream of the mixing section 347 and enables the mixed air to diffuse prior to exiting through the duct outlet 348.

With reference to FIG. 1, the ejector duct 320 diverges from the duct inlet 346 to the duct outlet 348. In this example, the ejector duct 320 is coupled to the airframe or structure of the rotorcraft 99 such that the duct outlet 348 exhausts the sand, dust particles and water droplets out of the rotorcraft 99 directly into the atmosphere surrounding the rotorcraft 99. This provides a low pressure loss flow path for the air through the scavenge branch 302 and the ejector duct 320, which enables ram air to drive the air with the entrained particles into the scavenge branch 302 and out through the ejector duct 320 when bleed air or anti-icing fluid is not being supplied to the flow ejector nozzles 316, 318. In this regard, during cruise operation of the rotorcraft 99 (FIG. 1), ram air is received at the inlet 202, which has a forward velocity and dynamic pressure that drives the flow of the air with the entrained particles through the scavenge branch 302 and the ejector duct 320 to exit into the ambient atmosphere at the duct outlet 348 without requiring the use of the flow ejector nozzles 316, 318. This improves performance of the gas turbine engine 100 as bleed air or anti-icing fluid is not required to drive the ejector driven scavenge system 300 to separate particles with the particle separator 198 continuously during the operation of the gas turbine engine 100.

With continued reference to FIG. 1, with the particle separator 198 formed, via additive manufacturing, for example, the ejector duct 320 is coupled to the scavenge outlet 302b of the scavenge branch 302. The first anti-icing conduit 326 is coupled to the outer wall 232. The first flow ejector nozzles 316 are coupled to the first manifold 328, and are coupled to the first ejector openings 304 defined in the scavenge branch 302 so as to be in fluid communication with the flow passage defined by the scavenge branch 302 and the ejector duct 320. The first manifold 328 is coupled to the outer wall 232 of the scavenge branch 302. The first anti-icing conduit 326 is coupled to the first manifold 328 so as to be in fluid communication with the first manifold 328. The second anti-icing conduit 330 is coupled to the inner wall 234 and the scavenge branch inner wall 308. The second flow ejector nozzles 318 are coupled to the second manifold 332, and are coupled to the second ejector openings 306 defined in the scavenge branch 302 so as to be in fluid communication with the flow passage defined by the scavenge branch 302 and the ejector duct 320. The second manifold 332 is coupled to the scavenge branch inner wall 308 of the scavenge branch 302. The second anti-icing conduit 330 is coupled to the second manifold 332 so as to be in fluid communication with the second manifold 332. The annulus 206 is coupled to the gas turbine engine 100 so as to be upstream from the inlet guide vane 120 of the compressor section 104. The supply conduit 310, 322, 324 is fluidly coupled to the compressor section 104 and to the first anti-icing circuit 312 and the second anti-icing circuit 314.

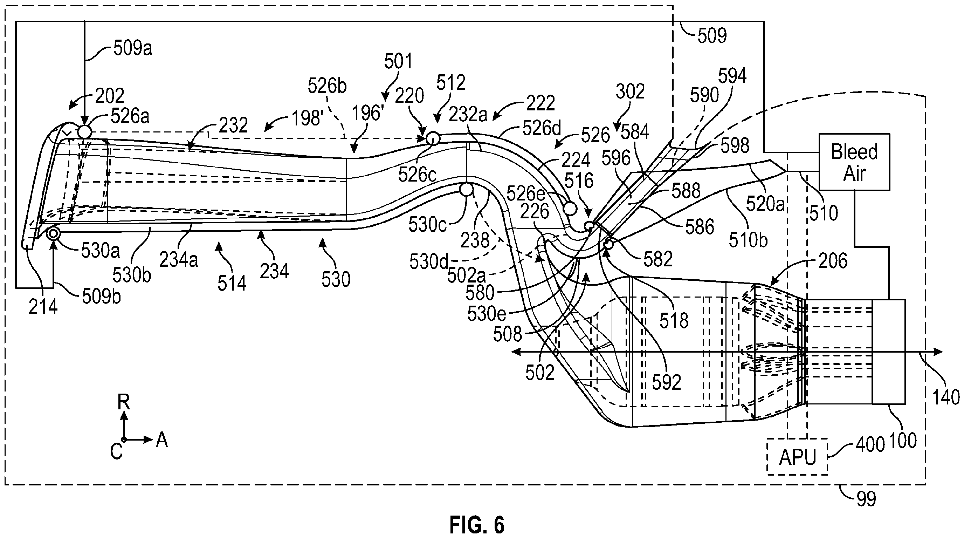

It should be noted that in other embodiments, the ejector driven scavenge system 300 may be configured differently to exhaust the sand, dust particles and water droplets from the rotorcraft 99 (FIG. 1), while also providing anti-icing to a particle separator 198'. For example, with reference to FIG. 6, an ejector driven scavenge system 500 is shown. As the ejector driven scavenge system 500 includes components that are the same or similar to components of the ejector driven scavenge system 300 discussed with regard to FIGS. 1-5, the same reference numerals will be used to denote the same or similar components. In this example, the ejector driven scavenge system 500 is employed with the particle separator 198', which includes components that are the same or similar to components of the particle separator 198 discussed with regard to FIGS. 1-5, and thus, the same reference numerals will be used to denote the same or similar components. The particle separator 198' includes the inlet 202, a duct 196' and the annulus 206. The particle separator 198' may be composed of composites, metal or metal alloy, and may be formed via casting, additive manufacturing, such as direct metal laser sintering (DMLS), etc. The duct 196' is integrally formed with and in fluid communication with the inlet 202 and couples or interconnects the inlet 202 with the annulus 206. The duct 196' includes the ramp surface 220, the throat 222, the transition section 224, the splitter 226, a scavenge branch 502 and the engine airflow branch 230.

The scavenge branch 502 is defined between the splitter 226 and the outer wall 232 downstream from the transition section 224. The scavenge branch 502 also includes a scavenge outlet 502b in fluid communication with the ejector driven scavenge system 500, as will be discussed. The scavenge branch 502 is fluidly isolated from the annulus 206 or is not in fluid communication with the annulus 206. The scavenge branch 502 is generally rectangular in cross-section just downstream of splitter 226, however, the scavenge branch 502 may have any desired shape. The scavenge branch 502 is spaced apart from and fluidly isolated from the engine airflow branch 230. Generally, the scavenge branch 502 receives the particles as the particles follow along the outer wall 232 and separates the particles from the airflow entering the gas turbine engine 100. The separated particles may be exhausted by the ejector driven scavenge system 500 out of the rotorcraft 99.

In one example, the scavenge branch 502 includes a pair of opposed slots 580, 582, which each receive a portion of the ejector driven scavenge system 500. The slots 580, 582 extend over a width We of the scavenge branch 502. The slot 580 is defined through the outer wall 232 associated with the scavenge branch 502, and the slot 582 is defined through a scavenge branch inner wall 508. The scavenge branch inner wall 508 is opposite the outer wall 232 associated with the scavenge branch 502. The slots 580, 582 have a generally C-shape to accommodate the ejector driven scavenge system 500, however, the slots 580, 582 may have any desired shape to receive the ejector driven scavenge system 500.

In one example, the ejector driven scavenge system 500 includes a first supply conduit 509, a second supply conduit 510, a first anti-icing circuit 512, a second anti-icing circuit 514, a first ejector manifold 516, a second ejector manifold 518 and an ejector duct 520. Generally, the first anti-icing circuit 512 and the second anti-icing circuit 514 cooperate to heat the particle separator 198' along the bellmouth 214 of the inlet 202, along the ramp surface 220, along the throat 222, the outer wall 232 of the transition section 224 and along the splitter 226 to inhibit detrimental ice buildup. It should be noted that the surfaces heated by the first anti-icing circuit 512 and the second anti-icing circuit 514 are merely an example, as the first anti-icing circuit 512 and the second anti-icing circuit 514 may be coupled to additional portions of the particle separator 198' for heating. In FIG. 6, an axial direction A is a direction substantially parallel to the centerline 140 of the gas turbine engine 100, a radial direction R is a direction substantially perpendicular to the centerline 140 of the gas turbine engine 100, and a circumferential direction C is a direction tangential to the centerline 140 of the gas turbine engine 100.

In one example, the ejector driven scavenge system 500 includes the first supply conduit 509 and the second supply conduit 510, which are each fluidly coupled to the compressor section 104 of the gas turbine engine 100. The first supply conduit 509 is fluidly coupled to the first anti-icing circuit 512 and the second anti-icing circuit 514. The second supply conduit 510 is fluidly coupled to the first ejector manifold 516 and the second ejector manifold 518. In this example, the first supply conduit 509 supplies bleed air from the compressor section 104, such as bleed air from the compressor 122b to the first anti-icing circuit 512 and the second anti-icing circuit 514. The second supply conduit 510 supplies bleed air from the compressor section 104, such as bleed air from the compressor 122b to the first ejector manifold 516 and the second ejector manifold 518. The bleed air from the compressor section 104 is an anti-icing fluid, and in this example, the first anti-icing circuit 512, the second anti-icing circuit 514, the first ejector manifold 516 and the second ejector manifold 518 each receive the anti-icing fluid from the same source. The first supply conduit 509 includes tubing, ducting, pneumatic couplings, and the like to fluidly couple the compressor section 104 to the first anti-icing circuit 512 and the second anti-icing circuit 514. The second supply conduit 510 also includes tubing, ducting, pneumatic couplings, and the like to fluidly couple the compressor section 104 to the respective one of the first ejector manifold 516 and the second ejector manifold 518. One or more valves may also be coupled to the first supply conduit 509 and/or the second supply conduit 510, if desired, to control an amount of fluid flow through the first supply conduit 509 and/or the second supply conduit 510, and an amount of anti-icing fluid supplied to the first anti-icing circuit 512, the second anti-icing circuit 514, the first ejector manifold 516 and the second ejector manifold 518. In this example, the first supply conduit 509 may include a branched outlet end such that the first supply conduit 509 is fluidly coupled to the first anti-icing circuit 512 via a first branch 509a and is fluidly coupled to the second anti-icing circuit 514 via a second branch 509b. The second supply conduit 510 may include a branched outlet end such that the second supply conduit 510 is fluidly coupled to the first ejector manifold 516 via a first branch 510a and is fluidly coupled to the second ejector manifold 518 via a second branch 510b.

It should be noted that in other examples, the ejector driven scavenge system 500 may include any number of supply conduits to fluidly couple the first anti-icing circuit 512, the second anti-icing circuit 514, the first ejector manifold 516 and the second ejector manifold 518 to the compressor section 104 or other source onboard the rotorcraft 99 to receive bleed air or anti-icing fluid. In addition, it should be noted that while the compressor section 104 is described and illustrated herein as comprising the source of bleed air or the source of anti-icing fluid for the anti-icing circuit 512, 514 and the ejector manifolds 516, 518, other sources of anti-icing fluid may be employed to supply the anti-icing circuit 512, 514 and the ejector manifolds 516, 518 with anti-icing fluid. For example, the anti-icing circuit 512, 514 and the ejector manifolds 516, 518 may be fluidly coupled to the auxiliary power unit (APU) 400 associated with the rotorcraft 99 to receive bleed air or other fluid from the APU 400 as the anti-icing fluid. In this example, tubing, ducting, pneumatic couplings, and the like may be used to fluidly couple the APU 400 to the anti-icing circuit 512, 514 and the ejector manifolds 516, 518. In other examples, an external source of anti-icing fluid, such as an electrically driven stand-alone compressor may be employed to provide anti-icing fluid to the anti-icing circuit 512, 514 and the ejector manifolds 516, 518. Thus, the gas turbine engine 100 need not be the source of bleed air for the ejector driven scavenge system 500, but rather other sources may be employed, such as the APU 400 or an external source, to supply the anti-icing fluid to the particle separator 198'. This may be desirable to optimize an efficiency of the gas turbine engine 100.

The first anti-icing circuit 512 is coupled to the outer wall 232 of the duct 196'. In one example, the first anti-icing circuit 512 extends from the inlet 202 to the scavenge branch 502 along the outer wall 232 of the particle separator 198'. The first anti-icing circuit 512 includes a first anti-icing conduit 526 that terminates proximate the scavenge branch 502. The first anti-icing conduit 526 is fluidly coupled to the first supply conduit 509 and receives the bleed air or anti-icing fluid from the compressor section 104. As the bleed air from the compressor section 104 is warmer than the ambient air surrounding the particle separator 198', the bleed air or anti-icing fluid warms the outer wall surface 232a as the bleed air flows through the first anti-icing conduit 526. By warming the outer wall surface 532a, the first anti-icing conduit 526 substantially reduces or eliminates ice buildup that may reduce the airflow through the particle separator 198', which reduces performance of the gas turbine engine 100, or ice that may shed and affect the components associated with the gas turbine engine 100 and/or the ejector driven scavenge system 500.

In one example, the first anti-icing conduit 526 is composed of a cylindrical flexible tubing, which is fluidly coupled to the first supply conduit 509. It should be noted that the first anti-icing conduit 526 need not be cylindrical, but may have any suitable polygonal cross-sectional shape, such as rectangular, square, oval, etc. In addition, it should be noted that the shape and size of the first anti-icing conduit 526 shown in the figures is merely an example. The first anti-icing conduit 526 is also coupled to the outer wall 232 so as to extend between the inlet 202 and the scavenge branch 502. In one example, the first anti-icing conduit 526 is coupled to the outer wall 232 so as to form a pattern, in which a first portion 526a of the first anti-icing conduit 526 extends in the circumferential direction C along the inlet 202 at the bellmouth 214 before turning, arching, or bending to define a second portion 526b that extends in substantially axially or in the axial direction A along the outer wall 232. The second portion 526b turns, arches, or bends to define a third portion 326c that extends in the circumferential direction C along the outer wall 232. The third portion 526c turns, arches, or bends to define a fourth portion 526d that extends substantially axially or in the axial direction A along the outer wall 232 along the transition section 224. The fourth portion 526d turns, arches, or bends to define a fifth portion 526e that extends circumferentially or in the circumferential direction C along the outer wall 232 proximate the scavenge branch 502. The fifth portion 526e of the first anti-icing conduit 526 may terminate at a fuselage of the rotorcraft 99, and the anti-icing fluid in the first anti-icing conduit 526 may be released into the environment surrounding the rotorcraft 99.

It should be noted that this configuration or arrangement of the first anti-icing conduit 526 is merely exemplary, as the first anti-icing conduit 526 may be arranged in any desired pattern along the outer wall 232 to provide anti-icing for the particle separator 198' between the inlet 202 and the scavenge branch 502. For example, the first anti-icing conduit 526 may be orientated positive or negative 90 degrees relative to the foregoing description. Alternatively, the first anti-icing conduit 526 may be arranged in a plurality of vertical columns or horizontal rows along the outer wall 232. In other examples, the first anti-icing conduit 526 may comprise a first plenum upstream from a second plenum, and may include a double wall that extends between the first plenum and the second plenum to direct the bleed air or anti-icing fluid from the first plenum through the double wall to the second plenum to heat the outer wall surface 232a of the outer wall 232. In this example, the first plenum may be coupled to the inlet 202 at the bellmouth 214, and the second plenum may be coupled to the scavenge branch 502, with the double wall extending along the outer wall 232 and fluidly interconnecting the first plenum and the second plenum. In addition, the first anti-icing conduit 526 may comprise the anti-icing conduit 326' discussed with regard to FIG. 3, and the first anti-icing conduit 526 may include the plenum 402. Generally, the first anti-icing conduit 526 is fluidly isolated from the first ejector manifold 516 and the second ejector manifold 518.

The second anti-icing circuit 514 is coupled to the inner wall 234 of the duct 196'. In one example, the second anti-icing circuit 514 extends from the inlet 202 to the scavenge branch 502 along the inner wall 234 of the particle separator 198'. The second anti-icing circuit 514 includes a second anti-icing conduit 530 that terminates proximate the scavenge branch 502. The second anti-icing conduit 530 is fluidly coupled to the first supply conduit 509 and receives the bleed air from the compressor section 104 as the anti-icing fluid. As the bleed air from the compressor section 104 is warmer than the ambient air surrounding the particle separator 198', the bleed air warms the inner wall surface 234a as the bleed air flows through the second anti-icing conduit 530. By warming the inner wall surface 234a, the second anti-icing conduit 530 also substantially reduces or eliminates ice forming downstream of the inlet 202 and affecting the gas turbine engine 100.

In one example, the second anti-icing conduit 530 is composed of a cylindrical flexible tubing, which is fluidly coupled to the first supply conduit 509. It should be noted that the second anti-icing conduit 530 need not be cylindrical, but may have any suitable polygonal cross-sectional shape, such as rectangular, square, oval, etc. In addition, it should be noted that the shape and size of the second anti-icing conduit 530 shown in the figures is merely an example. The second anti-icing conduit 530 is also coupled to the inner wall 234 so as to extend between the inlet 202 and the scavenge branch 502. In one example, the second anti-icing conduit 530 is coupled to the inner wall 234 so as to form a pattern along the inner wall 234, in which a first portion 530a of the second anti-icing conduit 530 extends in the circumferential direction C along the inlet 202 at the bellmouth 214 before turning, arching, or bending to define a second portion 530b that extends in substantially axially or in the axial direction A along the inner wall 234. The second portion 530b turns, arches, or bends to define a third portion 530c that extends in the circumferential direction C along the inner wall 234. The third portion 530c turns, arches, or bends to define a fourth portion 530d that extends substantially axially or in the axial direction A along the inner wall 234. The fourth portion 530d turns, arches, or bends to define a fifth portion 530e that extends circumferentially or in the circumferential direction C along the scavenge branch inner wall 508. The fifth portion 530e of the second anti-icing conduit 530 may terminate at a fuselage of the rotorcraft 99, and the anti-icing fluid in the second anti-icing conduit 530 may be released into the environment surrounding the rotorcraft 99.

It should be noted that this configuration or arrangement of the second anti-icing conduit 530 is merely exemplary, as the second anti-icing conduit 530 may be arranged in any desired pattern along the inner wall 234 and the scavenge branch inner wall 308 to provide anti-icing for the particle separator 198' between the inlet 202 and the scavenge branch 502. For example, the second anti-icing conduit 530 may be orientated positive or negative 90 degrees relative to the foregoing description. Alternatively, the second anti-icing conduit 530 may be arranged in a plurality of vertical columns or horizontal rows along the inner wall 234. In other examples, the second anti-icing conduit 530 may comprise a first plenum upstream from a second plenum, and may include a double wall that extends between the first plenum and the second plenum to direct the bleed air or anti-icing fluid from the first plenum through the double wall to the second plenum to heat the inner wall surface 234a of the inner wall 234. In this example, the first plenum may be coupled to the inlet 202 at the bellmouth 214, and the second plenum may be coupled to the throat 222 of the duct 196', with the double wall extending along the inner wall 234 and fluidly interconnecting the first plenum and the second plenum. In addition, the second anti-icing conduit 530 may comprise the second anti-icing conduit 330' discussed with regard to FIG. 3, and the second anti-icing conduit 530 may include the first plenum 410 and the second plenum 412. Generally, the second anti-icing conduit 530 is fluidly isolated from the first ejector manifold 516 and the second ejector manifold 518.

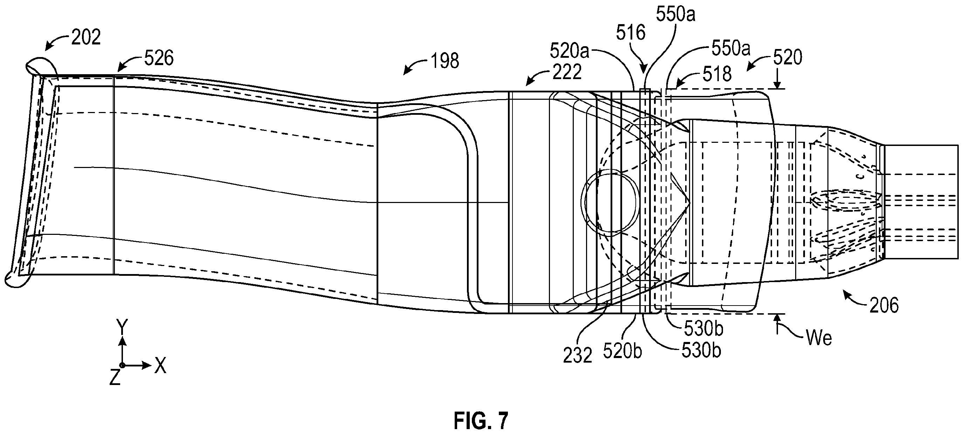

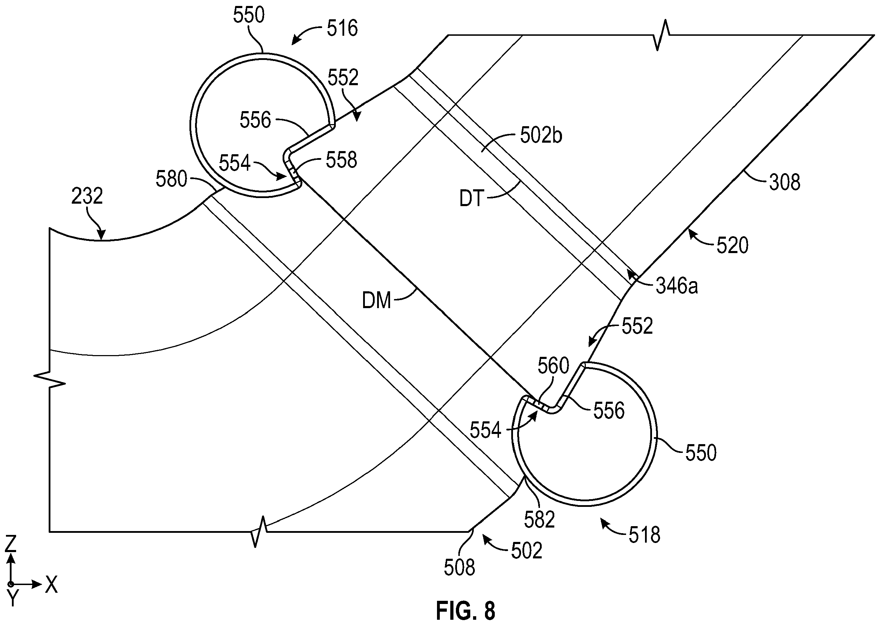

The first ejector manifold 516 and the second ejector manifold 518 are each fluidly coupled to the second supply conduit 510 to receive the bleed air or anti-icing fluid. Each of the first ejector manifold 516 and the second ejector manifold 518 are composed of a metal or metal alloy, and may be formed via casting, additive manufacturing, such as direct metal laser sintering (DMLS), etc. The first ejector manifold 516 and the second ejector manifold 518 may be formed separately or discrete from the particle separator 198' and coupled to the particle separator 198' via welding, etc. or may be integrally formed with the particle separator 198'. With reference to FIG. 7, the first ejector manifold 516 and the second ejector manifold 518 each extend for the width We of the scavenge branch 502 or from a first side 520a of the scavenge branch 502 to an opposite second side 520b of the scavenge branch 502. In this example, the first ejector manifold 516 is offset from or misaligned with the second ejector manifold 518 in the axial direction, such that the first ejector manifold 516 is upstream from the second ejector manifold 518 in the direction of fluid flow through the scavenge branch 502. With reference to FIG. 8, and end view of the first ejector manifold 516 and the second ejector manifold 518 is shown. Each of the first ejector manifold 516 and the second ejector manifold 518 include a substantially cylindrical body 550 having a notch 552. The notch 552 is defined in the body 550 to extend along a length of the body 550, from a first body end 550a to an opposite second body end 550b (FIG. 7). The notch 552 enables the first ejector manifold 516 and the second ejector manifold 518 to be coupled to the scavenge branch 502.

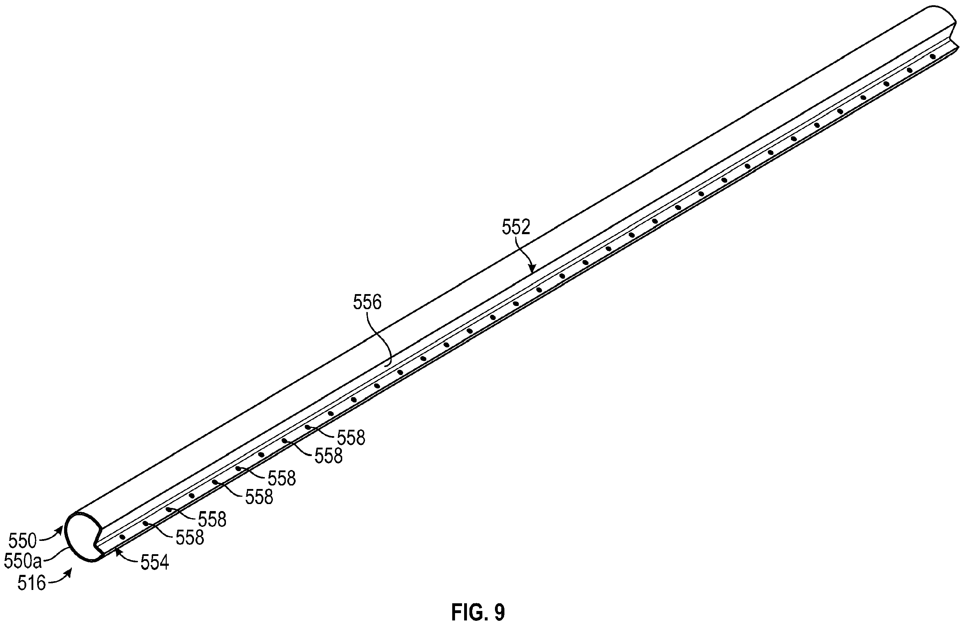

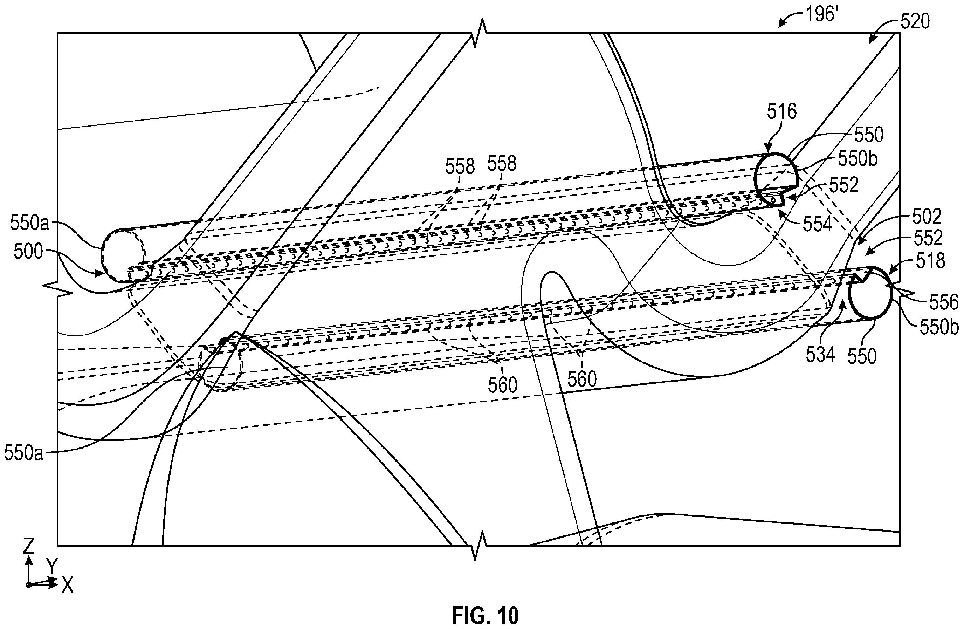

In this example, with reference to FIG. 9, the notch 552 has a substantially L-shape or has a first flat or planar wall 554 and a second flat or planar wall 556. The first wall 554 is substantially perpendicular to the second wall 556. In one example, an angle defined between the first wall 554 and the second wall 556 is between about 90 and about 105 degrees. The first wall 554 of the notch 552 of the first ejector manifold 516 includes a plurality of first holes 558 and the first wall 554 of the notch 552 of the second ejector manifold 518 includes a plurality of second holes 560 (FIG. 10). The first holes 558 and the second holes 560 may be formed in the first ejector manifold 516 and the second ejector manifold 518 during additive manufacturing or casting, for example, or by drilling. By providing the first wall 554 as flat or planar, an orientation of the first holes 558 and the second holes 560 of the respective one of the first ejector manifold 516 and the second ejector manifold 518 may be controlled as the first holes 558 and the second holes 560 are formed through a flat surface and not a rounded or arcuate surface. The first holes 558 and the second holes 560 comprise a respective flow ejector bank, which ejects the anti-icing fluid from the second supply conduit 510 into the ejector duct 520.

With reference to FIG. 10, a number of the first holes 558 defined through the first wall 554 of the first ejector manifold 516 is different and greater than a number of the second holes 560 defined in the first wall 554 of the second ejector manifold 518. The greater number of the first holes 558 results in additional bleed air being injected into the ejector duct 520 along the outer wall 232, which has a weaker boundary layer. This helps to eliminate upstream boundary layer separation to improve both separation efficiency and ejector performance. In addition, as the boundary layer is stronger opposite the outer wall 232, the number of the second holes 560 is reduced to enable a reduction in the amount of bleed air needed to drive the ejector duct 320. Stated another way, the different number of holes 558, 560 between the first ejector manifold 516 and the second ejector manifold 518 eliminates or reduces upstream flow separation and enables uniform outflow from the ejector duct 520 with less bleed air. In one example, the first ejector manifold 516 includes about 45 to about 50 first holes 558, and the second ejector manifold 518 includes about 30 to about 35 second holes 560. The first ejector manifold 516 has a different and greater flow area (due to the different and greater number of the first holes 558) than the second ejector manifold 518. It should be noted that while in this example, the first holes 558 and the second holes 560 have the same diameter, such that the greater number of first holes 558 results in the greater flow area or greater volume of fluid flow, other techniques may be used to provide the first ejector manifold 516 with the greater flow area. For example, the number of the first holes 558 and the second holes 560 may be the same, while a diameter of the first holes 558 is different and greater than a diameter of the second holes 560. A volume of fluid injected into the ejector duct 520 by the first ejector manifold 516 is different and greater than a volume of fluid injected into the ejector duct 520 by the second ejector manifold 518. The second wall 556 assists in coupling the respective one of the first ejector manifold 516 and the second ejector manifold 518 to the ejector duct 520, and although not illustrated herein, may include a seal to reduce or inhibit the bleed air from escaping between the first ejector manifold 516, the second ejector manifold 518 and the ejector duct 520 due to a difference in static pressure.

Generally, each of the first ejector manifold 516 and the second ejector manifold 518 define a plenum that supplies the first holes 558 and the second holes 560, respectively, with the bleed air or anti-icing fluid from the second supply conduit 510. Thus, the first holes 558 and the second holes 560 use the anti-icing fluid from the supply conduit 509, 510 to direct the sand, dust particles and water droplets through the scavenge branch 502, the ejector duct 520 and into the atmosphere surrounding the rotorcraft 99 (FIG. 1). Generally, the use of the ejector manifolds 516, 518 having the holes 558, 560 is easy to manufacture, and may have a reduced cost. With reference back to FIG. 6, the first ejector manifold 516 is coupled to the outer wall 232 along the scavenge branch 502 so as to be downstream of the splitter 226 and an inlet 502a of the scavenge branch 502. In one example, the first ejector manifold 516 is coupled to the scavenge branch 502 such that the first holes 558 are upstream from the second holes 560 in a direction of fluid flow through the scavenge branch 502. The second ejector manifold 518 is coupled to the scavenge branch inner wall 508 along the scavenge branch 502 so as to be downstream of the splitter 226 and the inlet 502a of the scavenge branch 502, and so as to be upstream from the scavenge outlet 502b of the scavenge branch 502. In one example, with reference to FIG. 8, the second ejector manifold 518 is coupled to the scavenge branch 502 such that the second holes 560 are downstream from the first holes 558 in a direction of fluid flow through the scavenge branch 502 and are upstream from the contraction 346a defined in the ejector duct 520. It should be noted, however, that the ejector manifolds 516, 518 may be positioned at any desired location within the scavenge branch 502 and the ejector duct 520, and computational fluid dynamics analysis may be employed to determine the position for the holes 558, 560 and the ejector manifolds 516, 518 within the scavenge branch 502 and/or ejector duct 520 based on the fluid dynamics associated with the particle separator 198' and the gas turbine engine 100.

In one example, the first ejector manifold 516 and the second ejector manifold 518 are coupled to the scavenge branch 502 such that the first wall 554 of each of the first ejector manifold 516 and the second ejector manifold 518 is positioned within the scavenge branch 502. In this example, the opposed slots 580, 582 each receive a respective one of the first ejector manifold 516 and the second ejector manifold 518. The slots 580, 582 enable each of the first ejector manifold 516 and the second ejector manifold 518 to be fluidly coupled to the scavenge branch 502. In this example, the first ejector manifold 516 and the second ejector manifold 518 are positioned within the scavenge branch 502 such that an entirety of the first wall 554 of each of the first ejector manifold 516 and the second ejector manifold 518 are contained wholly within the scavenge branch 502. A portion of the body 550 of each of the first ejector manifold 516 and the second ejector manifold 518 is also positioned within the scavenge branch 502. In one example, the second wall 556 of the first ejector manifold 516 is positioned against the outer wall 232, and the second wall 556 of the second ejector manifold 518 is positioned against the scavenge branch inner wall 508. As discussed, a seal may be positioned between the second wall 556 and the outer wall 232, and another seal may be positioned between the second wall 556 and the scavenge branch inner wall 508. Generally, the first ejector manifold 516 and the second ejector manifold 518 are coupled to the scavenge branch 502 such that a distance DM between the first holes 558 of the first ejector manifold 516 and the second holes 560 of the second ejector manifold 518 is different and greater than a distance DT between the outer wall 232 and the scavenge branch inner wall 508 at the contraction 346a of the ejector duct 520. By coupling the first ejector manifold 516 and the second ejector manifold 518 to the scavenge branch 502 with the respective slot 580, 582, the first ejector manifold 516 and the second ejector manifold 518 may be easily replaced, if needed.

With reference to FIG. 6, the ejector duct 520 is coupled to the scavenge outlet 502b of the scavenge branch 502. In one example, the ejector duct 520 is formed of a metal or metal alloy, via casting, additive manufacturing (direct metal laser sintering, etc.), and is coupled to the scavenge outlet 502b via welding. It should be noted that in other examples, the ejector duct 520 may be integrally formed or one-piece with the particle separator 198'. In this example, the ejector duct 520 includes a top duct surface 584, a bottom duct surface 586 opposite the top duct surface 584 and opposed sidewalls 588, which cooperate to define a flow passage 590 that interconnects a duct inlet 592 with a duct outlet 594. The contraction 346a is defined proximate the duct inlet 592 and so as to be downstream of the holes 558, 560. The flow passage 590 includes a mixing section 596 and a diffuser section 598. The mixing section 596 extends from proximate the duct inlet 592 to the diffuser section 598. The mixing section 596 enables the air from the holes 558, 560 to mix with the air with the entrained particles prior to flowing to the diffuser section 598. The diffuser section 598 is downstream of the mixing section 596 and enables the mixed air to diffuse prior to exiting through the duct outlet 594.

The ejector duct 520 diverges from the duct inlet 592 to the duct outlet 594. In this example, the ejector duct 520 is coupled to the airframe or structure of the rotorcraft 99 such that the duct outlet 594 exhausts the sand, dust particles and water droplets out of the rotorcraft 99 directly into the atmosphere surrounding the rotorcraft 99. This provides a low pressure loss flow path for the air through the scavenge branch 502 and the ejector duct 520, which enables ram air to drive the air with the entrained particles into the scavenge branch 502 and out through the ejector duct 520 when bleed air or anti-icing fluid is not being supplied to the holes 558, 560. In this regard, during cruise operation of the rotorcraft 99 (FIG. 1), ram air is received at the inlet 202, which has a forward velocity and dynamic pressure that drives the flow of the air with the entrained particles through the scavenge branch 502 and the ejector duct 520 to exit into the ambient atmosphere at the duct outlet 594 without requiring the use of the ejector manifolds 516, 518. This improves performance of the gas turbine engine 100 as bleed air or anti-icing fluid is not required to drive the ejector driven scavenge system 500 to separate particles with the particle separator 198' continuously during the operation of the gas turbine engine 100.

With continued reference to FIG. 6, with the particle separator 198' formed, via additive manufacturing, for example, the ejector duct 520 is coupled to the scavenge outlet 502b of the scavenge branch 502. The first anti-icing conduit 526 is coupled to the outer wall 232. The second anti-icing conduit 530 is coupled to the inner wall 234 and the scavenge branch inner wall 508. The first ejector manifold 516 is coupled to the outer wall 232 of the scavenge branch 502. The second ejector manifold 518 is coupled to the scavenge branch inner wall 508 of the scavenge branch 502. The annulus 206 is coupled to the gas turbine engine 100 so as to be upstream from the inlet guide vane 120 of the compressor section 104. The first supply conduit 509 is fluidly coupled to the first anti-icing conduit 526 and the second anti-icing conduit 530. The second supply conduit 510 is fluidly coupled to first ejector manifold 516 and the second ejector manifold 518. The first supply conduit 509 and the second supply conduit 510 are fluidly coupled to the compressor section 104.

With the particle separator 198, 198' coupled to the gas turbine engine 100, during operation of the gas turbine engine 100, external or atmospheric air is drawn in through the inlet 202. The particles entrained in the air are accelerated by the ramp surface 220 to the bend 238 at the throat 222. Air with entrained particles of all sizes (coarse particles greater than 100 micrometers (µm), mid-range particles 20-100 µm, and fine particles less than 20 µm) gathers near and along the outer wall 232 through the bend 238 at the throat 222, and is drawn into the downstream scavenge branch 302 by the ejector driven scavenge system 300, 500. Generally, the bleed air or the anti-icing fluid injected into the scavenge branch 302, 502 by the flow ejector nozzles 316, 318 or the holes 558, 560 of the ejector manifolds 516, 518, respectively, has a high pressure that draws the air with the entrained particles into the scavenge branch 302, 502, and forces the air with the entrained particles along the ejector duct 320, 520 and through the duct outlet 348, 594 to the atmosphere. Air devoid of or with a substantially reduced amount of entrained particles turns at the bend 238 and flows along the inner wall 234 into the engine airflow branch 230. From the engine airflow branch 230, the air substantially devoid of entrained particles transitions to the annulus 206 and flows from the annulus 206 into the compressor section 104. As the bleed air or anti-icing fluid from the compressor section 104 flows through the first anti-icing circuit 312, 512 and the second anti-icing circuit 314, 514, the air warms the outer wall surface 232a, the inner wall surface 234a and the surface of the scavenge branch inner wall 308, 508, respectively, which substantially inhibits ice from forming on these surfaces of the particle separator 198, 198'.

Thus, the particle separator 198, 198' and the ejector driven scavenge system 300, 500 substantially removes particles entrained in the atmospheric air surrounding the rotorcraft 99 during operation of the gas turbine engine 100. By removing the particles, a life of the components associated with the gas turbine engine 100 is improved, as particle ingestion by the gas turbine engine 100 is significantly reduced. The ejector driven scavenge system 300, 500 further provides for anti-icing along the particle separator 198, 198' which substantially eliminates ice forming on surfaces of the particle separator 198, 198'. The particle separator 198, 198' also significantly reduces the amount of liquid water content or droplets entering the gas turbine engine 100, where the liquid water droplets may freeze and affect components associated with the gas turbine engine 100. By combining the ejector driven scavenge system 300, 500 with anti-icing for the particle separator 198, 198', the amount of bleed air required from the compressor section 104 is reduced, which improves the efficiency of the gas turbine engine 100 by reducing power loss. The ejector driven scavenge system 300, 500 is less susceptible to erosion, and does not require moving components to draw the air with the entrained particles into the scavenge branch 302, 502, which reduces a maintenance associated with the gas turbine engine 100. In addition, the use of the ejector driven scavenge system 300, 500 reduces or eliminates flow separation near the splitter 226, which improves an efficiency of the particle separator 198. In this regard, the use of a blower or fan with the scavenge branch 302, 502 may result in the formation of a separation region upstream of the splitter 226, which may reduce the efficiency of the particle separator 198. By providing the ejector driven scavenge system 300, 500, however, flow separation near the splitter 226 is eliminated and the efficiency of the particle separator 198 is improved.

The ejector driven scavenge system 300, 500 is also less susceptible to damage from foreign object encounters. In addition, during high speed forward flight, the ejector driven scavenge system 300, 500 does not require bleed air from the compressor section 104 to operate the particle separator 198, 198'. In this instance, the particle separator 198, 198' is able to separate the particles due to the ram air acting on the inlet 202, which is sufficient to drive air through the scavenge branch 302, 502 due to the low pressure loss provided by the ejector duct 320, 520 coupled to the scavenge branch 302, 502. In contrast, a fan driven system may require power in flight because the ram air pressure may be insufficient to drive flow through a fan driven scavenge system of a particle separator. Thus, the particle separator 198, 198' reduces an amount of power required for the operation of the particle separator 198, 198' during the operation of the rotorcraft 99.

It should be noted that while the ejector driven scavenge system 300 is described herein as including the plurality of first flow ejector nozzles 316 and the plurality of second flow ejector nozzles 318, in certain instances, the ejector driven scavenge system 300 may include a single first flow ejector nozzle 316 with the plurality of second flow ejector nozzles 318; a single second flow ejector nozzle 318 with the plurality of first flow ejector nozzles 316; a single first flow ejector nozzle 316 and a single second flow ejector nozzle 318 or any combination thereof. In addition, the ejector driven scavenge system 300 may include a single manifold instead of the first manifold 328 and the second manifold 332. Further, the ejector driven scavenge system 300 may include a flow ejector slot defined in the first manifold 328 and/or the second manifold 332 instead of the flow ejector nozzles 316, 318. In addition, while the ejector driven scavenge system 300 is described herein as including the plurality of first flow ejector nozzles 316 and the plurality of second flow ejector nozzles 318, the ejector driven scavenge system 300 may include one of the plurality of first flow ejector nozzles 316 or the plurality of second flow ejector nozzles 318.

In addition, in one example, with reference to FIG. 2, the first manifold 328 and the second manifold 332 may include an independent supply conduit 334, 336, respectively, which may be controlled by a valve 338, for example, to supply the bleed air from the compressor section 104 to the first manifold 328 and/or the second manifold 332 directly. Stated another way, the valve 338 may be controlled, by a controller having a memory and a processor, such as a FADEC 339 associated with the gas turbine engine 100, to supply the bleed air or the anti-icing fluid to the first manifold 328 and/or the second manifold 332 independently of the first anti-icing circuit 312 and the second anti-icing circuit 314. In these instances, the first flow ejector nozzles 316 and the second flow ejector nozzles 318 receive the bleed air to drive the air with the entrained particles through the scavenge branch 302 while anti-icing of the particle separator 198 is not performed. This may be desirable in certain operating conditions of the rotorcraft 99. Thus, the valve 338 may be controlled by the FADEC 339 to supply bleed air from the compressor section 104 to the first anti-icing circuit 312 and the second anti-icing circuit 314, and thus, the first manifold 328 and the second manifold 332; or the valve 338 may be controlled by the FADEC 339 to supply bleed air from the compressor section 114 to the first manifold 328 and the second manifold 332. It should be noted that while the first manifold 328 and the second manifold 332 are illustrated with a respective supply conduit 334, 336, the first manifold 328 and the second manifold 332 may be supplied by a single independent supply conduit.

In addition, it should be noted that while the first anti-icing circuit 312, 512 and the second anti-icing circuit 314, 514 are described herein as comprising the first anti-icing conduit 326, 526 and the second anti-icing conduit 330, 530, in other examples, one or more of the first anti-icing circuit 312, 512 and the second anti-icing circuit 314, 514 may include an electrical heat source or electrical heating system to heat the outer wall 232, the inner wall 234 and/or the scavenge branch inner wall 308, 508, respectively, in addition to or instead of the first anti-icing conduit 326, 526 and the second anti-icing conduit 330, 530. Thus, in certain examples, the flow ejector nozzles 316, 318 may be supplied the bleed air independently of the first anti-icing conduit 326 and the second anti-icing conduit 330, and the first anti-icing circuit 312 and the second anti-icing circuit 314 may include the flow ejector nozzles 316, 318, respectfully, and an electrical heat source or electrical heating system. In certain examples, the ejector manifolds 516, 518 may be used with an electrical heat source or electrical heating system.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. An ejector driven scavenge system for a particle separator having a scavenge branch associated with a gas turbine engine, comprising:
at least one anti-icing circuit configured to receive an anti-icing fluid, the at least one anti-icing circuit configured to be coupled to the particle separator; and
at least one flow ejector bank configured to be coupled to the scavenge branch and fluidly coupled to the anti-icing fluid to direct the anti-icing fluid through the scavenge branch to drive air with entrained particles and water droplets from the particle separator.

2. The ejector driven scavenge system of Claim 1, wherein the at least one anti-icing circuit includes a first anti-icing circuit and a second anti-icing circuit, and the at least one flow ejector bank includes a first flow ejector nozzle bank and a second flow ejector nozzle bank, with the first flow ejector nozzle bank fluidly coupled to the first anti-icing circuit and the second flow ejector nozzle bank fluidly coupled to the second anti-icing circuit.

3. The ejector driven scavenge system of Claim 2, wherein the first flow ejector nozzle bank is opposite the second flow ejector nozzle bank in the scavenge branch and the first anti-icing circuit is configured to be coupled to an opposite side of the particle separator than the second anti-icing circuit.

4. The ejector driven scavenge system of Claim 2, wherein the first flow ejector nozzle bank comprises a plurality of first flow ejector nozzles, the second flow ejector nozzle bank comprises a plurality of second flow ejector nozzles, and each first flow ejector nozzle of the plurality of first flow ejector nozzles alternates with a respective one of the plurality of second flow ejector nozzles along an axis defined through the scavenge branch.

5. The ejector driven scavenge system of Claim 2, further comprising a first manifold fluidly coupled to the first anti-icing circuit and fluidly coupled to the first flow ejector nozzle bank, a second manifold fluidly coupled to the second anti-icing circuit and fluidly coupled to the second flow ejector nozzle bank, and the first manifold and the second manifold are configured to be disposed external to the scavenge branch.

6. The ejector driven scavenge system of Claim 1, further comprising a first manifold fluidly coupled to the anti-icing fluid and comprising a plurality of first holes configured to direct the anti-icing fluid through the scavenge branch, a second manifold fluidly coupled to the anti-icing fluid and comprising a plurality of second holes configured to direct the anti-icing fluid through the scavenge branch, and the plurality of first holes and the plurality of second holes form the at least one flow ejector bank.

7. The ejector driven scavenge system of Claim 6, wherein the first manifold and the second manifold are configured to be disposed at least partially within the scavenge branch.

8. The ejector driven scavenge system of Claim 6, wherein a first flow area defined by the plurality of first holes in the first manifold is different than a second flow area defined by the plurality of second holes defined in the second manifold.

9. The ejector driven scavenge system of Claim 1, wherein the gas turbine engine is associated with a vehicle, and the ejector driven scavenge system further comprises a source of the anti-icing fluid that is fluidly coupled to the at least one anti-icing circuit, and the source is the gas turbine engine.

10. A gas turbine engine for a vehicle, comprising:
a source of the anti-icing fluid;
the particle separator including an inlet and the scavenge branch, the inlet configured to receive air and the particle separator configured to separate entrained particles and water droplets from the air; and
the ejector driven scavenge system of Claim 1, the at least one anti-icing circuit includes a first anti-icing circuit coupled to the particle separator, the first anti-icing circuit including a first manifold coupled to the scavenge branch and the at least one flow ejector that is fluidly coupled to the first manifold and to the scavenge branch.

11. The gas turbine engine of Claim 10, further comprising a second anti-icing circuit coupled to the source of the anti-icing fluid, the second anti-icing circuit coupled along the particle separator opposite the first anti-icing circuit from proximate the inlet to the scavenge branch, the second anti-icing circuit includes a second manifold coupled to the scavenge branch and at least one second flow ejector that is fluidly coupled to the second manifold and to the scavenge branch, and the at least one second flow ejector is configured to receive the anti-icing fluid to drive the entrained particles and the water droplets from the particle separator.

12. The gas turbine engine of Claim 10, wherein the at least one flow ejector comprises a plurality of first flow ejector nozzles, the at least one second flow ejector comprises a plurality of second flow ejector nozzles, and each first flow ejector nozzle of the plurality of first flow ejector nozzles alternates with a respective one of the plurality of second flow ejector nozzles along an axis defined through the scavenge branch.

13. The gas turbine engine of Claim 10, further comprising a second anti-icing circuit coupled to a second source of the anti-icing fluid, the second anti-icing circuit coupled along the particle separator opposite the first anti-icing circuit from proximate the inlet to the scavenge branch, the source of the anti-icing fluid is the gas turbine engine and the second source of the anti-icing fluid is an auxiliary power unit associated with the vehicle.

14. The gas turbine engine of Claim 10, wherein the first anti-icing circuit is defined as a plenum fluidly coupled to the source of the anti-icing fluid and fluidly coupled to the first manifold, the first anti-icing circuit is defined as a double wall along a surface of a wall of the particle separator or the first anti-icing circuit is defined as at least one conduit coupled to the particle separator.

15. A gas turbine engine for a vehicle, comprising:
a source of the anti-icing fluid;
the particle separator including an inlet and the scavenge branch, the inlet configured to receive air and the particle separator configured to separate entrained particles and water droplets from the air; and
the ejector driven scavenge system of Claim 1 including a first flow ejector manifold coupled to the scavenge branch so as to be partially received within the scavenge branch, the first flow ejector manifold defining a plurality of first holes configured to direct the anti-icing fluid through the scavenge branch, and the plurality of first holes define the at least one flow ejector bank.
